# EUROPÄISCHE PATENTSCHRIFT

(11) **EP 3 966 147 B1**
(45) Veröffentlichungstag und Bekanntmachung des Hinweises auf die Patenterteilung: **15.02.2023**
(21) Anmeldenummer: 20722590.5
(22) Anmeldetag: 04.05.2020
(51) Int. Cl.: B66B 1/34, B66B 19/00

(54) **VERFAHREN ZUR ERFASSUNG UND BEARBEITUNG VON AUFZUGSDATEN EINER AUFZUGSANLAGE**
METHOD FOR ACQUIRING AND PROCESSING DATA OF AN ELEVATOR SYSTEM
PROCÉDÉ DE DÉTECTION ET DE TRAITEMENT DES DONNÉES D'UN SYSTÈME D'ASCENSEUR

(30) Priorität: 07.05.2019 EP 19173039; 27.05.2019 EP 19176791
(43) Veröffentlichungstag der Anmeldung: 16.03.2022
(73) Patentinhaber: INVENTIO AG, 6052 Hergiswil (CH)
(72) Erfinder: CORTONA, Elena, 8002 Zürich (CH)
(74) Vertreter: Inventio AG
(86) Internationale Anmeldenummer: PCT/EP2020/062294
(87) Internationale Veröffentlichungsnummer: WO 2020/225199

(56) Entgegenhaltungen:
- JP-B1- 4 411 371
- US-A1- 2005 077 117
- US-A1- 2014 174 861
- US-A1- 2015 158 699
- Manuel Pijorr: "Digital Transformation in the Elevator Industry - Moving from Physical Testing to Simulation", MATLAB Expo, Bern, 23. Mai 2019 (2019-05-23), XP055647213, Gefunden im Internet: URL:https://www.mathworks.com/videos/digit al-transformation-in-the-elevator-industry -moving-from-physical-testing-to-simulatio n-1562094171320.html [gefunden am 2019-11-27] in der Anmeldung erwähnt
- Speedgoat: "Validating Schindler's next generation elevator controller family with hardware-in-the-loop simulation", , 31. Januar 2019 (2019-01-31), XP055647212, Gefunden im Internet: URL:https://www.speedgoat.com/user-stories /speedgoat-user-stories/schindler [gefunden am 2019-11-27] in der Anmeldung erwähnt

## Beschreibung

Die Erfindung betrifft ein Verfahren zur Optimierung von Steuerungsdaten der Aufzugssteuerung einer bestehenden oder zu modernisierenden Aufzugsanlage sowie ein System zur Durchführung dieses Verfahrens.

Aufzugsanlagen dienen dazu, Personen innerhalb von Gebäuden oder Bauwerken zu befördern. Damit eine Aufzugsanlage einwandfrei funktioniert, ist für deren Aufzugssteuerung ein Parametersatz mit sehr präzisen, auf die konfigurationsbedingten Eigenheiten der Aufzugsanlage abgestimmten Steuerungsdaten erforderlich. Nur so kann die Aufzugskabine der Aufzugsanlage die richtigen Positionen genau anfahren und einen hohen Fahrkomfort für deren Benutzer bieten. Aufzugshersteller bieten üblicherweise mehrere Produktelinien an, die sich in ihrem Aufbau deutlich unterscheiden, aber gegebenenfalls eine gleichartige Aufzugssteuerung verwenden. Gleichartig deshalb, weil zwar die Steuerungshardware und die Steuerungssoftware der Aufzugssteuerung bei allen Produktelinien gleich ist, jedoch für die Steuerungssoftware unterschiedliche, die technischen Unterschiede der Produktelinien berücksichtigenden Parametersätze verwendet werden.

Unterschiedliche Parametersätze sind nicht nur für die verschiedenen Produktelinien erforderlich. Tatsächlich ist auch für eine Aufzugsanlage einer Produktelinie (Standardprodukt) jede Kundeninstallation anders, da kundenspezifische Konfigurierungsdaten wie die Stockwerkhöhen, die Größe der Aufzugskabine, die zu befördernde Masse, die Fahrgeschwindigkeit etc. sehr variabel sind, um die Bedürfnisse der Kunden zu erfüllen, die eine solche Aufzugsanlage betreiben. Auch Vorschriften aus Normen wie beispielsweise die maximale Beschleunigung und Verzögerung der Aufzugskabine bestimmen die Parametersätze mit.

Beim Testen einer Produktlinie wird in der Regel eine "repräsentative" Konfiguration gewählt, und die Tests werden mittels dieser Testanlage mit dieser speziellen Konfiguration durchgeführt. Anschließend werden die Ergebnisse beziehungsweise der für die Aufzugssteuerung ermittelte Parametersatz der Testanlage auf das gesamte Anwendungsgebiet der Produktlinie hochgerechnet. Da es eine begrenzte Anzahl verfügbarer Testtürme gibt, kann zum Beispiel für eine Produktlinie mit einer Förderhöhe bis 50 Meter nur ein Testturm mit einer Förderhöhe von 30 Metern zur Verfügung stehen. Dem entsprechend wird aus der Produktelinie eine Testanlage mit 30 Metern Förderhöhe konfiguriert und zur Ermittlung des Parametersatzes getestet. Dann werden die Ergebnisse auf alle möglichen Konfigurationen der Produktlinie extrapoliert. Die Praxis zeigt jedoch, dass bei einer Modernisierung neu installierte Aufzugskomponenten mit einer anderen als der getesteten Förderhöhe hernach konfigurationsbedingte Probleme wie beispielsweise Schwingungsprobleme und damit Lärmprobleme aufweisen können und somit die Extrapolation der Ergebnisse nicht immer zu einem idealen Parametersatz für die Aufzugssteuerung führt. Die Behebung dieser Probleme durch die Anpassung des Parametersatzes erfordert hochqualifiziertes Personal vor Ort und verzögert die Übergabe der fertiggestellten Aufzugsanlage.

In den Dokumenten XP055647213 und XP055647212 wird die Entwicklung von Produkten unter Zuhilfenahme des «Hardware in the Loop- Ansatzes» beschrieben. Hierbei werden Steuerungsdaten mittels eines konfigurierbaren Simulationsmodells als Simulationsumgebung getestet und ermittelt. Auch wenn dieser Ansatz bereits sehr wirklichkeitsnahe Resultate erbringt, sind diese Resultate dennoch von der Konfigurierungsgüte des Simulationsmodells abhängig. Bei Abweichungen kann sich für eine existierende oder zu modernisierende Aufzugsanlage ein Nachbearbeitungsaufwand ergeben, der auf der Baustelle durch Tests erbracht werden muss.

Ein anderer Problemkreis ist, dass bestehende Aufzugsanlagen nicht zwingend vom Aufzugshersteller selbst gewartet werden. So kann es aus verschiedensten Gründen dazu kommen, dass sogenannte Fremdanlagen, also Aufzugsanlagen anderer Aufzugshersteller in das eigene Wartungsportfolio übernommen und gewartet werden. Gegebenenfalls werden solche Fremdanlagen modernisiert, so dass in einer modernisierten Aufzugsanlage hernach Bauteile verschiedener Hersteller aufeinander angepasst, verbaut sind. Häufig wird bei solchen Fremdanlagen beispielsweise die bestehende, fremde Aufzugssteuerung durch eine eigene Aufzugssteuerung ersetzt, da die Architektur und die Eigenschaften der eigenen Aufzugssteuerung bekannt sind und keine Spezialkenntnisse der fremden Aufzugssteuerung erworben werden müssen. Hierbei müssen aber verschiedene charakterisierende Eigenschaften der bestehenden Aufzugsanlage wie beispielsweise die Anzahl Stockwerke, die Stockwerkhöhen, die auf die mechanischen und elektrischen Komponenten abgestimmten Bewegungsprofile der Aufzugskabine über die einzelnen Stockwerkhöhen und dergleichen mehraufgenommen und für die eigene Aufzugssteuerung ein auf diese charakterisierenden Eigenschaften abgestimmter Parametersatz ermittelt werden. Insbesondere kann es wünschenswert sein, dass mit der Modernisierung der bestehenden Aufzugsanlage auch die Bewegungsprofile der Aufzugskabine überarbeitet, und nicht einfach von der alten Aufzugssteuerung übernommen werden.

Wenn eine Fremdanlage in das Wartungsportfolio übernommen wird, stellt sich daher immer das Problem der Erfassung der technischen Daten dieser bestehenden Aufzugsanlage sowie deren Verfügbarmachung. Üblicherweise wird ein Techniker in die zu übernehmende Fremdanlage geschickt, der dann verschiedene charakterisierende Eigenschaften dieser Aufzugsanlage ermittelt und manuell in einem Formular oder in einer Datenbank erfasst. Je nach der Komplexität einer zu übernehmenden Aufzugsanlage müssen beispielsweise 15 bis 50 charakterisierende Eigenschaften manuell im Formular oder in der Datenbank eingetragen werden. Die manuelle Erfassung der charakterisierenden Eigenschaften und deren Dokumentierung in der Datenbank erfordert einen enormen Zeitaufwand und kann je nach der Arbeitsqualität des Technikers zu einer schlechten Datenqualität und hernach beim Extrapolieren zu einem ungenügenden Parametersatz führen, der wiederum mit grossem Aufwand vor Ort an der bestehenden Aufzugsanlage angepasst werden muss und deren Verfügbarkeit für den Kunden beeinträchtigt.

Die Aufgabe der vorliegenden Erfindung besteht somit darin, für die Aufzugssteuerung einer spezifischen Aufzugsanlage einen möglichst präzise auf diese Aufzugsanlage abgestimmten Parametersatz zu ermitteln, ohne dass die spezifische Aufzugsanlage dafür zur Verfügung steht.

Erfindungsgemäss wird diese Aufgabe durch ein Verfahren mit den Merkmalen des Anspruchs 1 gelöst. Bei dem Verfahren zur Optimierung von Steuerungsdaten der Aufzugssteuerung einer bestehenden oder zu modernisierenden Aufzugsanlage wird die Aufzugssteuerung an eine programmierbare Vorrichtung angeschlossen. Auf die programmierbare Vorrichtung wird ein dreidimensionaler Digitaler-Doppelgänger-Datensatz als Simulationsumgebung geladen, der mittels eines Computerprogrammproduktes erzeugbar ist. Der dreidimensionale Digitaler-Doppelgänger-Datensatz bildet hierbei die der Aufzugsteuerung zugeordnete, bestehende oder zu modernisierende Aufzugsanlage ab und simuliert diese. Dadurch kann ein für einen Betrieb in der Simulationsumgebung abgestimmter Parametersatz für die Aufzugssteuerung der bestehenden oder modernisierten Aufzugsanlage durch Testen der Aufzugssteuerung in der Simulationsumgebung ermittelt werden.

Der dreidimensionale Digitaler-Doppelgänger-Datensatz der bestehenden oder modernisierten Aufzugsanlage wird mittels des Computerprogrammproduktes aus Bauteilmodell-Datensätzen aufgebaut und in einem Speichermedium gespeichert, wobei die Bauteilmodell-Datensätze unterschiedliche Konfigurationen aufweisen können und durch charakterisierende Eigenschaften definiert sind. Jede charakterisierende Eigenschaft eines Bauteilmodell-Datensatzes ist durch einen Vorgabe-Wert vordefiniert, durch einen Soll-Wert vorgegeben, oder durch einen Ist-Wert bestimmt. Üblicherweise bildet ein Bauteilmodell-Datensatz einen physischen Bauteil in seiner Gesamtheit ab, das heisst, dass die Informationen, die die charakterisierenden Eigenschaften liefern, das physische Bauteil möglichst präzise in virtueller Form wiedergeben. Das heisst, dass sich die charakterisierenden Eigenschaften auf einzelne Bauteile beziehen können, aus denen größere, komplexere Bauteilgruppen zusammengesetzt werden.

Charakterisierenden Eigenschaften eines Bauteilmodell-Datensatzes im Sinne der vorliegenden Erfindung können geometrische Abmessungen, OberflächenBeschaffenheiten, physikalische Eigenschaften, dynamische Eigenschaften und dergleichen mehr des durch diese abgebildeten Bauteils sein. Geometrische Abmessungen können beispielsweise eine Länge, eine Breite, eine Höhe, ein Querschnitt, Radien, Verrundungen, etc. des Bauteils sein. Die Oberflächenbeschaffenheit des Bauteils kann beispielsweise Rauigkeiten, Texturen, Beschichtungen, Farben, Reflektivitäten, etc. umfassen. Physikalische Eigenschaften können das Gewicht beziehungsweise die Materialdichte, den Elastizitätsmodul, die Leitfähigkeit, das Trägheitsmoment, den Biegefestigkeitswert und dergleichen mehr sein. Dynamische Eigenschaften können dem Bauteilmodell-Datensatz zugeordnete Bewegungs-Freiheitsgrade, Geschwindigkeitsprofile und dergleichen mehr sein.

Die charakterisierenden Eigenschaften können sich aber nicht nur auf einzelne Bauteile, sondern bei in sich abgeschlossenen Teilsystemen, auch auf Bauteilgruppen beziehen. Das heisst, dass sich die charakterisierenden Eigenschaften auch auf aus mehreren Bauteilen zusammengesetzte, komplexere Gerätschaften wie zum Beispiel Antriebsmotoren, Getriebeeinheiten, Förderketten, etc. beziehen können.

Vorgabe-Werte im Sinne der vorliegenden Erfindung sind Werte, die die charakterisierenden Eigenschaften eines Bauteilmodell-Datensatzes vordefinieren. Das heisst beispielsweise, dass ein Vorgabe-Wert eines, als Führungsschienen-Bauteilmodell-Datensatz konfigurierten Bauteilmodell-Datensatzes, der eine Führungsschiene abbildet, im Sinne eines Platzhalters eine Standardlänge definiert. Auch die Querschnittsform dieses Führungsschienen-Bauteilmodell-Datensatzes kann durch Vorgabe-Werte vordefiniert sein. Es ist nun offensichtlich, dass die charakterisierende Eigenschaft des Führungsschienen-Bauteilmodell-Datensatzes, welche Länge der Führungsschiene repräsentiert, bei der Erstellung des Digitaler-Doppelgänger-Datensatzes angepasst werden muss, währen die Querschnittsform gegebenenfalls ausreichend durch die Vorgabe-Werte bereits definiert ist. Auch für charakterisierende Eigenschaften, die materialspezifische Eigenschaften eines Bauteils wie dessen Elastizitätsmodul, dessen Kerbschlagzähigkeit und dergleichen mehr wiedergeben, reichen häufig die aus den Herstellerangaben übernommene Angaben aus.

Soll-Werte im Sinne der vorliegenden Erfindung sind Werte, die die charakterisierenden Eigenschaften eines Bauteilmodell-Datensatzes in einer Soll-Konfiguration definieren. Solche Soll-Werte sind üblicherweise durch kundenspezifische Konfigurierungsdaten bei einer modernisierten Aufzugsanlage definiert oder können auf deren Basis errechnet werden.

Unter kundenspezifischen Konfigurierungsdaten können dabei Vorgaben verstanden werden, welche Einzelfall-spezifisch vom Kunden zum Beispiel beim Ordern der Aufzugsanlage vorgegeben werden. Die kundenspezifischen Konfigurierungsdaten beziehen sich dabei typischerweise auf eine einzelne zu fertigende Aufzugsanlage. Beispielsweise können die kundenspezifischen Konfigurierungsdaten vorherrschende räumliche Bedingungen am Einbauort, Schnittstelleninformationen zum Anbau an tragende Strukturen eines Bauwerks, etc. umfassen.

Anders ausgedrückt können die kundenspezifischen Konfigurierungsdaten zum Beispiel angeben, wie viele Stockwerke die Aufzugsanlage verbinden soll, die Stockwerkhöhen, in welcher Weise die Aufzugsanlage an tragende Strukturen innerhalb des Gebäudes angebunden werden soll, und dergleichen mehr. Kundenspezifische Konfigurierungsdaten können auch Wünsche des Kunden hinsichtlich Funktionalität, Förderkapazität, Optik, etc. umfassen. Die Daten des dreidimensionalen Digitaler-Doppelgänger-Datensatzes können beispielsweise als CAD-Datensatz vorliegen, welcher unter anderem als charakterisierende Eigenschaften geometrische Abmessungen und/oder andere charakterisierende Eigenschaften der die Aufzugsanlage bildenden Bauteile wiedergibt.

Das bedeutet, dass beispielsweise bei dem vorangehend erwähnten, als Führungsschienen-Bauteilmodell-Datensatz konfigurierten Bauteilmodell-Datensatz dessen Vorgabe-Wert als die Länge definierende, charakterisierende Eigenschaft durch einen Soll-Wert ersetzt wird, der durch die kundenspezifischen Konfigurierungsdaten vorgegeben wird. Gegebenenfalls ist der Soll-Wert auch noch mit einer Toleranzangabe versehen.

Ist-Werte im Sinne der vorliegenden Erfindung sind Werte, die am physischen Bauteil, welches durch den Bauteilmodell-Datensatz virtuell abgebildet wird, durch Messen, Prüfen und Testen ermittelt wurden.

Je mehr charakterisierende Eigenschaften eines Bauteilmodell-Datensatzes durch einen Ist-Wert definiert sind, desto präziser ist insgesamt die Simulationsumgebung und desto präziser ist der durch das Testen und Optimieren der Aufzugssteuerung in der Simulationsumgebung ermittelte Parametersatz. Aus den vorgenannten Gründen können die Bauteilmodell-Datensätze des als Simulationsumgebung dienenden, dreidimensionalen Digitaler-Doppelgänger-Datensatzes in gemischter Weise durch Vorgabe-Werte, Soll-Werte und Ist-Werte charakterisiert sein.

Erfindungsgemäss wird bei einer bestehenden oder zu modernisierenden Aufzugsanlage zumindest einen Teil ihrer Ist-Werte durch mindestens eine Messfahrt erfasst, wobei jedes Stockwerk der bestehenden Aufzugsanlage zumindest einmal angefahren wird. Dabei können mittels einer Messeinrichtung zumindest diejenigen Messdaten erfasst werden, die Stockwerkhöhen repräsentieren. Für jedes durch die Messfahrt erfasste Stockwerk der bestehenden Aufzugsanlage werden hernach in der erfassten Reihenfolge als Stockwerkabschnitt-Bauteilmodell-Datensatz konfigurierte Bauteilmodell-Datensätze und/oder als Schachtabschnitt-Bauteilmodell-Datensatz konfigurierte Bauteilmodell-Datensätze in vertikaler Richtung übereinander angeordnet. Bei diesen wird jeweils der Vorgabe-Wert der charakterisierenden Eigenschaft, die den Höhenabstand zum nächsten Bauteilmodell-Datensatz definiert, durch die entsprechende, aus den Messdaten ermittelte Stockwerkhöhe ersetzt.

Die Messeinrichtung im Sinne der vorliegenden Anmeldeschrift kann eine Vielzahl von Geräten umfassen. Beispielsweise kann dies ein Mobiltelefon mit einem Beschleunigungssensor sein, welches auf den Kabinenboden gelegt wird und bei den Fahrten von Stockwerk zu Stockwerk die Messdaten aufnimmt. Sie kann auch eine mit der Aufzugssteuerung der bestehenden Aufzugsanlage verbindbare Übertragungseinheit sein, die Messdaten aus der Aufzugssteuerung ausliest, diese gegebenenfalls in vorgesehener Weise aufbereitet und dem weiter unten beschriebenen System verfügbar macht. Die Messeinrichtung kann nebst dem vorangehend beschriebenen Mobiltelefon oder der Übertragungseinheit auch eine Vielzahl von dauerhaft oder temporär miteinander kommunizierender Geräte wie ein portabler Computer, ein Datenlogger, ein Laserscanner, ein RFID-Tag- Lesegerät und dergleichen mehr sein oder diese umfassen.

Mit anderen Worten kann für jedes durch die Messfahrt erfasste Stockwerk der Aufzugsanlage in der erfassten Reihenfolge beispielsweise jeweils ein als Stockwerkabschnitt-Bauteilmodell-Datensatz konfigurierter Bauteilmodell-Datensatz in vertikaler Richtung übereinander angeordnet werden und jeweils der Vorgabe-Wert von dessen charakterisierender Eigenschaft, die den Höhenabstand zum nächsten Stockwerkabschnitt- Bauteilmodell-Datensatz definiert, durch den entsprechenden, aus den Messdaten ermittelten Ist-Wert der Stockwerkhöhe ersetzt werden.

Das Merkmal in vertikaler Richtung übereinander angeordnet bedeutet hierbei, dass die Anordnung der Bauteilmodell-Datensätze derart erfolgt, dass Stockwerke und Schachtabschnitte analog zur bestehenden oder modernisierten Aufzugsanlage auch im dreidimensionaler Digitaler-Doppelgänger-Datensatz virtuell abgebildet sind, wobei «vertikal» im Allgemeinen die Transportrichtung umschreibt.

In einer Ausgestaltung der Erfindung kann jeder Stockwerkabschnitt-Bauteilmodell-Datensatz beziehungsweise jeder Schachtabschnitt-Bauteilmodell-Datensatz vordefinierte Schnittstellen aufweisen, über welche Schnittstellen Bauteilmodell-Datensätze miteinander verbunden und zueinander positioniert werden können. Hierbei werden korrespondierende charakterisierende Eigenschaften jedes anzufügenden Bauteilmodell-Datensatzes mit den charakterisierenden Eigenschaften des über die Schnittstelle zur Verbindung vorgesehenen Bauteilmodell-Datensatzes automatisch repliziert. Mit replizieren ist ein Vorgang gemeint, der die charakterisierenden Eigenschaften zweier miteinander verbundener Bauteilmodell-Datensätze zueinander abgleicht, wenn diese dieselben charakterisierenden Eigenschaften betreffen. Beispielsweise werden im Falle der Verwendung von Schachtabschnitt-Bauteilmodell-Datensätzen die den Schachtquerschnitt definierenden, charakterisierenden Eigenschaften «Tiefe» und «Breite» der über die Schnittstellen miteinander verbundenen Schachtabschnitt-Bauteilmodell-Datensätze repliziert, da ein Aufzugsschacht üblicherweise über seine ganze Höhe denselben Schachtquerschnitt aufweist. Auch andere charakterisierende Eigenschaften wie die Materialeigenschaften der Schachtwände können über alle Schachtabschnitt-Bauteilmodell-Datensätze hinweg repliziert werden.

Die Stockwerkhöhen können jedoch sehr unterschiedlich sein und können zum Beispiel als nicht replizierbar definiert sein, wenn sie nicht einander anliegend und daher nicht korrespondierend angeordnet sind. Die Replizierungsanweisungen können in einem speziellen Regelsatz für jeden Bauteilmodell-Datensatz hinterlegt sein. Grundsätzlich kann in diesen Replizierungsanweisungen festgelegt sein, dass beim Replizieren durch Messwerte definierte, charakterisierende Eigenschaften Vorrang gegenüber durch Vorgabe-Werte definierte charakterisierenden Eigenschaften haben.

In einer weiteren Ausgestaltung der Erfindung kann jeder Stockwerkabschnitt-Bauteilmodell-Datensatz vordefinierte Schnittstellen aufweisen und mit diesen Schnittstellen jeweils ein als Schachtabschnitt-Bauteilmodell-Datensatz konfigurierter Bauteilmodell-Datensatz verbunden werden. Der Schachtabschnitt-Bauteilmodell-Datensatz ist ebenfalls in seinen Dimensionen durch Vorgabe-Werte charakterisiert, die logischerweise nicht den Dimensionen der zugeordneten bestehenden oder modernisierten Aufzugsanlage entsprechen. Beim Verbinden wird nun der Vorgabe-Wert einer charakterisierenden Eigenschaft des mit dessen Schnittstellen verbundenen Schachtabschnitt-Bauteilmodell-Datensatzes, der die die Schachtabschnittshöhe definiert, durch den Höhenabstand des mit diesem verbundenen Stockwerkabschnitt-Bauteilmodell-Datensatzes ersetzt und damit repliziert.

In einer weiteren Ausgestaltung der Erfindung kann jeder Stockwerkabschnitt-Bauteilmodell-Datensatz vordefinierte Schnittstellen aufweisen und ein als Schacht-Bauteilmodell-Datensatz konfigurierter Bauteilmodell-Datensatz mit den Schnittstellen aller Stockwerkabschnitt-Bauteilmodell-Datensätze verbunden werden. Hierbei können die Stockwerkhöhen aller Stockwerkabschnitt-Bauteilmodell-Datensätze zu einer Gesamthöhe addiert, und diese Gesamthöhe den Vorgabe-Wert der entsprechenden charakterisierenden Eigenschaft des mit den Schnittstellen verbundenen Schacht-Bauteilmodell-Datensatzes im Sinne einer Replizierung korrespondierender charakterisierender Eigenschaften ersetzt werden.

In einer weiteren Ausführung der Erfindung kann ein als Aufzugskabinen-Bauteilmodell-Datensatz konfigurierter Bauteilmodell-Datensatz im durch mindestens einen Schachtabschnitt-Bauteilmodell-Datensatz gebildeten, virtuellen Schacht angeordnet werden. Dessen charakterisierende Eigenschaften umfassen zumindest Parameter, die während der Durchführung des Verfahrens verändert werden können und Teil des zu ermittelnden Parametersatzes sind. Anders ausgedrückt handelt es sich hier um einen bewegbar abzubildenden Bauteilmodell-Datensatz, der sich im virtuellen dreidimensionalen Raum relativ zu anderen Bauteilmodell-Datensätzen wie beispielsweise den Schachtabschnitt-Bauteilmodell-Datensätzen bewegen lässt. Dem entsprechend weist eine solche dynamische charakterisierende Eigenschaft ein Bewegungsprofil auf, das mindestens einen Bewegungsrichtungsvektor umfasst, der die Bewegungsrichtung des zugeordneten Bauteilmodell-Datensatzes relativ zu statischen Bauteilmodell-Datensätzen wie beispielsweise den Schachtabschnitt-Bauteilmodell-Datensätzen angibt. Ferner kann das Bewegungsprofil auch das gesamte Bewegungsspektrum über die als Stockwerkhöhe oder mehrere Stockwerkhöhen definierte, zurückzulegende Strecke aufweisen. Das Bewegungsprofil bildet hierbei die Beschleunigungsphase, die Fahrphase mit konstanter Geschwindigkeit und die Verzögerungsphase ab.

Des Weiteren kann auch ein als Tragmittel- Bauteilmodell-Datensatz konfigurierter Bauteilmodell-Datensatz im durch mindestens einen Schachtabschnitt-Bauteilmodell-Datensatz gebildeten, virtuellen Schacht angeordnet werden, wobei auch dessen charakterisierende Eigenschaften zumindest Parameter umfassen, die während der Durchführung des Verfahrens verändert werden können und Teil des zu ermittelnden Parametersatzes sind. Konkret ändert sich in Abhängigkeit der Position der Aufzugskabine im Schacht die Masse und die freischwingende Länge des Tragmittels. Um diese Gegebenheiten in der Simulationsumgebung zu berücksichtigen, können diese ebenfalls als dynamische charakterisierende Eigenschaften dem Tragmittel-Bauteilmodell-Datensatz zugeordnet werden.

Mit anderen Worten können im Falle einer bestehenden Aufzugsanlage die einzelnen, bei der Messfahrt aufgezeichneten Bewegungsprofile der Aufzugskabine dem Aufzugskabinen-Bauteilmodell-Datensatz in der Rangordnung der Stockwerke als charakterisierende Eigenschaften zugeordnet werden. Das bedeutet, dass bestimmte Bauteilmodell-Datensätze, die bewegbare Bauteile der bestehenden Aufzugsanlage repräsentieren, auch dynamische, charakterisierende Eigenschaften aufweisen können und somit genaugenommen vierdimensional charakterisiert sind.

Ferner können räumliche Dimensionen der bestehenden Aufzugskabine als Messwerte erfasst und die Vorgabe-Werte der zugeordneten, charakterisierenden Eigenschaften des Aufzugskabinen-Bauteilmodell-Datensatzes durch die gemessenen räumlichen Dimensionen ersetzt werden. Des Weiteren können hernach mittels einer Kollisionsprüfungsroutine die charakterisierenden Eigenschaften des mindestens Aufzugskabinen-Bauteilmodell-Datensatzes überprüft und bei kollidierenden Dimensionen entsprechende charakterisierende Eigenschaften des mindestens einen Schachtabschnitt-Bauteilmodell-Datensatzes den zu Kollisionen führenden Überragungen des Aufzugskabinen-Bauteilmodell-Datensatzes angepasst werden.

Mit anderen Worten wird der Schachtquerschnitt des mindestens Aufzugskabinen-Bauteilmodell-Datensatzes automatisiert zumindest auf die Bodenfläche der Aufzugskabine ausgedehnt. Hierbei kann die Anpassung mittels einer Anpassungsroutine erfolgen, die für den Schachtquerschnitt übliche Abstände zu den Kabinenwänden und gegebenenfalls auch einen Querschnittzuschlag für einen Gegengewicht--Bauteilmodell-Datensatz vorsieht.

Dasselbe gilt natürlich sinngemäss auch bei einer modernisierten Aufzugsanlage, wobei die Vorgabe-Werte der charakterisierenden Eigenschaften der Bauteilmodell-Datensätze nicht durch die Übernahme von Messwerten ersetzt werden, sondern durch die Übernahme und Umsetzung der kundenspezifischen Konfigurierungsdaten.

Zusammenfassend kann gesagt werden, dass durch den Aufbau eines dreidimensionalen Digitaler-Doppelgänger-Datensatzes ein digitales dreidimensionales Abbild der bestehenden Aufzugsanlage geschaffen wird, dessen wesentliche charakterisierende Eigenschaften durch die Übernahme und Implementierung der Messdaten oder durch die Umsetzung der kundenspezifischen Konfigurierungsdaten den charakterisierenden Eigenschaften der zugeordneten Aufzugsanlage entsprechen. Hierbei wird anhand der erfassten Messdaten oder der kundenspezifischen Konfigurierungsdaten zumindest die Anzahl Stockwerke mit einer entsprechenden Anzahl an Stockwerkabschnitt-Bauteilmodell-Datensätzen und/oder Schachtabschnitt-Bauteilmodell-Datensätzen abgebildet und den Messdaten entsprechend, deren Stockwerkabstand beziehungsweise deren Stockwerkhöhe angepasst. Ein solcher dreidimensionaler, Digitaler-Doppelgänger-Datensatz bietet nun die perfekte Basis einer Simulationsumgebung, um bei einer bestehenden Aufzugsanlage die neue Aufzugssteuerung oder bei einer modernisierten Aufzugsanlage deren Aufzugssteuerung zu programmieren und auszutesten. Je umfassender und präziser die bestehende oder modernisierte Aufzugsanlage im zugeordneten dreidimensionalen Digitaler-Doppelgänger-Datensatz abgebildet ist, desto besser sind natürlich auch die Simulationsergebnisse.

Der durch das Computerprogrammprodukt erstellte dreidimensionale Digitaler-Doppelgänger-Datensatz kann nun als Simulationsumgebung für dynamische Simulationen verwendet werden. Beispielsweise kann in einer weiteren Ausführung der Erfindung der dreidimensionale Digitaler-Doppelgänger-Datensatz aus einem Speichermedium abgerufen und als virtuelle Aufzugsanlage zumindest die Stockwerkhöhen der Stockwerke im richtigen Verhältnis zueinander wiedergebend und den Parametersatz der Aufzugssteuerung am Bauteilmodell-Datensatz der Aufzugskabine dynamisch wiedergebend, auf einem Bildschirm dargestellt werden. Dadurch lassen sich die Bewegungsabläufe der Aufzugskabine im Aufzugsschacht darstellen und durch den mit der Optimierung der Steuerungsdaten betrauten Techniker visuell beurteilen. Gegebenenfalls kann der Techniker hierdurch verschiedene Anpassungen am Parametersatz vornehmen und deren Auswirkungen in der Simulationsumgebung testen.

Der vorangehend beschriebene dreidimensionale Digitaler-Doppelgänger-Datensatz kann weiter präzisiert werden, indem beispielsweise bei einer bestehenden Aufzugsanlage der erfassende Techniker die Aufzugsanlage begeht und beispielsweise die Schachtgrube, den Schachtkopf und den Querschnitt des Schachtes ausmisst und die entsprechenden Vorgabe-Werte der von diesen Messdaten betroffenen Bauteilmodell-Datensätze über eine Eingabeschnittstelle eingibt, die zum weiter unten beschriebenen Systems zur Optimierung von Steuerungsdaten einer Aufzugssteuerung gehört. Gegebenenfalls verfügt der Techniker als Teil der Messeinrichtung auch über ein Laser-Distanzmessgerät, welches drahtlos mit der Eingabeschnittstelle kommunizieren kann, so dass eine Übernahme der Messwerte teilautomatisiert erfolgt. Hierbei kann der Techniker beispielsweise durch Bildschirmanweisungen auf einer Ausgabeschnittstelle des Systems, schrittweise durch die Messfahrt und die Erfassung weiterer charakterisierender Eigenschaften der bestehenden Aufzugsanlage geführt werden.

In einer weiteren Ausführung der Erfindung können über ein Graphical-User-Interface (GUI) weitere Bauteilmodell-Datensätze von Komponenten einer Aufzugsanlage aus einer Datenbank ausgewählt und über vordefinierte Schnittstellen in den dreidimensionaler Digitaler-Doppelgänger-Datensatz eingefügt werden. Die Auswahl kann hierbei teilautomatisiert durch den Techniker erfolgen, indem ihm beispielsweise das System aufgrund der erfassten und zu charakterisierenden Eigenschaften verarbeiteten Messdaten geeignete Komponenten vorschlägt. Die Auswahl kann aber auch dadurch erfolgen, dass der Techniker mit einem geeigneten Lesegerät des Systems Erkennungszeichen verbauter Komponenten wie beispielsweise Seriennummern, Barcodes, Matrixcodes, RFID-Tags und dergleichen mehr einliest. Aufgrund der erfassten Erkennungszeichen erscheinen auf dem Graphical-User-Interface nur Komponenten, die mit diesen Erkennungszeichen übereinstimmen.

Bei einer zu modernisierenden Aufzugsanlage kann das System sinngemäss aufgrund der erfassten und zu charakterisierenden Eigenschaften verarbeiteten kundenspezifischen Konfigurierungsdaten geeignete Komponenten vorschlagen.

Der Techniker kann die vorgeschlagenen Komponenten dann beispielsweise per «drag and drop»-Funktionen in einer dreidimensionalen virtuellen Darstellung des Digitaler-Doppelgänger-Datensatzes an der richtigen Stelle einfügen. Es besteht aber auch die Möglichkeit, dass mittels einer Time-of-Flight-Kamera oder einem Laserscanner aufgenommene Bilder und Bildsequenzen durch ein Bilddatenverarbeitungsprogramm verarbeitet werden können, wobei durch diese Verarbeitung in der Aufzugsanlage verbaute oder zu verbauende Komponenten identifiziert und deren entsprechende Bauteilmodell-Datensätze direkt in den dreidimensionalen Digitaler-Doppelgänger-Datensatz eingefügt oder auf dem Graphical-User-Interface vorgeschlagen werden können.

Als Bauteilmodell-Datensätze von Komponenten können beispielsweise Gegengewicht-, Führungsschienen-, Schachttüren-, Kabinentüren-, Antriebs-Bauteilmodell-Datensätze und Tragmittel-Bauteilmodell-Datensätze in verschiedenen Tragmittelführungsvarianten ausgewählt werden.

In einer weiteren Ausführung der Erfindung, können die durch Messdaten oder kundenspezifische Konfigurierungsdaten definierten charakterisierenden Eigenschaften mit einer Kennzeichnung versehen werden, so dass sie von charakterisierenden Eigenschaften mit Vorgabe-Werten unterscheidbar sind.

In einer weiteren Ausführung der Erfindung kann ein Bauteilmodell-Datensatz des Digitaler-Doppelgänger-Datensatzes durch einen definitiven Bauteilmodell-Datensatz ersetzt werden, indem dessen mit einer Kennzeichnung versehene charakterisierenden Eigenschaften durch eine Austauschrutine ausgelesen werden, anhand dieser gekennzeichneten, charakterisierenden Eigenschaften aus einer Datenbank mögliche, zu den charakterisierenden Eigenschaften passende, definitive Bauteilmodell-Datensätze real bestehender Komponenten von Aufzugsanlagen ermittelt werden, und der ersetzende Bauteilmodell-Datensatz gegebenenfalls durch manuelle Eingaben ergänzend ausgewählt wird. Nach erfolgter Auswahl des passenden, ersetzenden Bauteilmodell-Datensatzes wird der entsprechende Bauteilmodell-Datensatz des Digitaler-Doppelgänger-Datensatzes gelöscht und der ersetzende Bauteilmodell-Datensatz an den entsprechenden Schnittstellen des Digitaler-Doppelgänger-Datensatzes eingefügt, die der gelöschte Bauteilmodell-Datensatz freigegeben hat.

Durch den dreidimensionalen Digitaler-Doppelgänger-Datensatz steht nun eine Simulationsumgebung zur Verfügung, mittels der verschiede Zustände der bestehenden oder modernisierten Aufzugsanlage dynamisch überprüft werden können. Das heisst, dass nicht mehr einfach Testresultate aus dem Versuchsturm extrapoliert werden müssen, sondern dass das Verhalten des in der Aufzugssteuerung implementierten Parametersatzes anhand der virtuell durch den dreidimensionalen Digitaler-Doppelgänger-Datensatz zur Verfügung stehenden Bauteile beziehungsweise Bauteilmodell-Datensätze überprüft und optimiert werden können. Das weiter oben erwähnte Lärmproblem einer Aufzugsanlage erwächst beispielsweise aus einem Schwingungssystem von Aufzugskabine und Tragmittel, dessen komplexe Zusammenhänge nachfolgend rudimentär erklärt werden.

Das Tragmittel hat bestimmte elastische Eigenschaften in Längsrichtung und Querrichtung, ein bestimmtes, durch seinen Querschnitt vorgegebenes Flächenträgheitsmoment und bei einer bestimmten Länge eine bestimmte Eigenmasse. Alle diese Merkmale sind vorzugsweise ebenfalls im Tragmittel-Bauteilmodell-Datensatz des Digitaler-Doppelgänger-Datensatzes als charakterisierende Eigenschaften hinterlegt. Wie bereits weiter oben erwähnt, sind auch die Höhe des Aufzugschachtes und die einzelnen Stockwerkhöhen im Digitaler-Doppelgänger-Datensatz möglichst präzise abgebildet. Auch das Leergewicht der Aufzugskabine sowie deren maximal mögliche Zuladung können dem Aufzugskabinen-Bauteilmodell-Datensatz als charakterisierende Eigenschaften zugeordnet sein.

Durch die Fahrt im Aufzugschacht angeregt (beispielsweise durch die als charakterisierende Eigenschaften zwischen einem Führungsschuh der Aufzugskabine und einer Führungsschiene hinterlegten Reibungsverhältnisse), kann bei einer bestimmten Tragmittellänge die Eigenfrequenz dieses Schwingungssystems erreicht sein und die Schwingungen des Tragmittels quer zu seiner Längserstreckung können in Resonanz geraten. Mittels der modernen, zur Verfügung stehenden Simulationsmethoden, welche beispielsweise Finite-Elemente-Analysen mit einschliessen, lassen sich im Sinne einer Optimierungsroutine eine Vielzahl verschiedener Szenarien (unterschiedliche Beladung der Aufzugskabine, verschiedene Geschwindigkeitsprofile, zusätzliche durch charakterisierende Eigenschaften definierte, äussere Einflüsse wie Temperatur, Feuchtigkeit, Luftdruck und dergleichen mehr) für jeden Schachtabschnitt durchrechnen und simulieren, so dass für jeden dieser Schachtabschnitte sowie für Fahrten, die sich über mehrere Stockwerke erstrecken, ideale Geschwindigkeitsprofile ermittelt werden können, die als Parameter in der Aufzugssteuerung gespeichert werden können. Mit anderen Worten wird der Parametersatz mittels einer Optimierungsroutine nach vorgebbaren Qualitätskriterien in der Simulationsumgebung ermittelt. Die vorgegebenen Qualitätskriterien sind hierbei beispielsweise Toleranzangaben bezüglich der maximal zulässigen Schwingungsamplituden des Tragmittels sowie für den Benutzer der Aufzugsanlage angenehme Beschleunigungen und Verzögerungen der Aufzugskabine bei einer möglichst kurzen Dauer der Fahrt.

Je genauer der dreidimensionale Digitaler-Doppelgänger-Datensatz die bestehende oder modernisierte Aufzugsanlage abbildet, desto präziser kann ein optimierter Parametersatz für deren Aufzugssteuerung ermittelt werden. Dieser optimierte Parametersatz kann hernach in die Aufzugssteuerung der physischen Aufzugsanlage übernommen werden und es ist anzunehmen, dass dieser bereits bei der Inbetriebnahme der Aufzugsanlage perfekte Resultate hinsichtlich deren Betriebsverhaltens liefert.

Wie bereits weiter oben mehrmals erwähnt wurde, ist ein System zur Optimierung von Steuerungsdaten einer Aufzugssteuerung im Hinblick auf eine zugeordnete bestehende oder modernisierte Aufzugsanlage vorgesehen, mit dem die vorangehend beschriebenen Verfahren durchgeführt werden können. Hierzu umfasst das System eine programmierbare Vorrichtung und ein Computerprogrammprodukt mit maschinenlesbaren Programmanweisungen. Dabei kann die programmierbare Vorrichtung ein Einzelgerät wie beispielsweise ein Personal Computer, ein Laptop, Ein Mobiltelefon, ein Tablet, eine Aufzugssteuerung einer Aufzugsanlage oder dergleichen mehr sein. Die programmierbare Vorrichtung kann aber auch einen oder mehrere Computer umfassen. Insbesondere kann die programmierbare Vorrichtung aus einem Computernetzwerk gebildet sein, welches Daten in Form einer Datenwolke (Cloud) verarbeitet. Die programmierbare Vorrichtung kann hierfür über einen Speicher verfügen, in dem die Daten des dreidimensionalen Digitaler-Doppelgänger-Datensatzes und die zu dessen Erstellung erforderlichen Bauteilmodell-Datensätze verschiedener Konfiguration gespeichert werden können, beispielsweise in elektronischer oder magnetischer Form. Die programmierbare Vorrichtung kann ferner über Datenverarbeitungsmöglichkeiten verfügen. Beispielsweise kann die programmierbare Vorrichtung einen Prozessor aufweisen, mithilfe dessen Daten all dieser Datensätze und die maschinenlesbaren Programmanweisungen des Computerprogrammprodukts verarbeitet werden können. Die programmierbare Vorrichtung kann ferner über Datenschnittstellen verfügen, über die Daten in die programmierbare Vorrichtung eingegeben und/oder aus der programmierbaren Vorrichtung ausgegeben werden können. Die programmierbare Vorrichtung kann auch räumlich verteilt implementiert sein, beispielsweise wenn Daten über mehrere Computer verteilt in einer Datenwolke (Cloud) verarbeitet werden.

Insbesondere kann die programmierbare Vorrichtung programmierbar sein, das heißt durch ein geeignet programmiertes Computerprogrammprodukt dazu veranlasst werden, Computer- verarbeitbare Schritte und Daten der erfindungsgemäßen Verfahren auszuführen oder zu steuern. Das Computerprogrammprodukt kann Anweisungen oder Code enthalten, welche beispielsweise den Prozessor der Vorrichtung dazu veranlassen, Daten des dreidimensionalen Digitaler-Doppelgänger-Datensatzes zu erstellen, abzuspeichern, auszulesen, zu verarbeiten, zu modifizieren, etc. Das Computerprogrammprodukt kann in einer beliebigen Computersprache verfasst sein.

Durch das Ausführen des Computerprogrammprodukts auf der programmierbaren Vorrichtung kann unter Berücksichtigung der durch die Messeinrichtung erfassten Messdaten oder durch zuvor erfasste, kundenspezifische Konfigurierungsdaten, ein dreidimensionaler Digitaler-Doppelgänger-Datensatz aus Bauteilmodell-Datensätzen aufgebaut und in einem Speichermedium der programmierbaren Vorrichtung gespeichert werden. Die zu diesem Zwecke aus einer Datenbank, abrufbaren Bauteilmodell-Datensätze weisen unterschiedliche Konfigurationen auf und sind durch charakterisierende Eigenschaften definiert, die mit Vorgabe-Werten vordefiniert sind. Die Datenbank mit den Bauteilmodell-Datensätzen ist vorzugsweise ebenfalls in der Datenwolke hinterlegt, sie kann aber auch Teil des Computerprogrammproduktes sein.

Im Falle einer bestehenden Aufzugsanlage kann das System zudem eine Messeinrichtung aufweisen, mittels der durch mindestens eine Messfahrt mit einer bestehenden Aufzugsanlage zumindest diejenigen Messdaten erfassbar sind, aus denen Stockwerkhöhen der Stockwerke der Aufzugsanlage ermittelbar sind. Dazu gehört beispielsweise das Bewegungsprofil und die Fahrzeit zwischen den Stockwerken, aus denen die Stockwerkhöhen berechnet werden können. Selbstverständlich können die Stockwerkhöhen auch aus Daten der Aufzugssteuerung der bestehenden Aufzugsanlage ermittelt werden, beispielsweise aus einem mit der Aufzugssteuerung verbundenen Schachtinformationssystem, aus Sensorsignalen, die von mit der Aufzugssteuerung verbundenen Sensoren der bestehenden Aufzuganlage generiert werden und dergleichen mehr. Die Messeirichtung kann ein speziell für diesen Zweck ausgebildetes Gerät sein, das über Datenspeicherressourcen wie RAM, ROM, EPROM, Festplattenspeicher, SDRAM und dergleichen mehr, Datenverarbeitungsressourcen wie, Prozessoren Prozessornetzwerke und dergleichen mehr, Schnittstellen wie eine Eingabeschnittstelle und eine Ausgabeschnittstelle sowie Geräteschnittstellen, welche die Kommunikation zu anderen Geräten wie beispielsweise zur Aufzugssteuerung der bestehenden Aufzuganlage, zur nachfolgend beschriebenen, programmierbaren Vorrichtung des Systems und dergleichen mehr ermöglichen, sowie über Sensoren verfügen kann. Die Messeinrichtung kann aber auch ein Konglomerat von verschiedenen, physisch voneinander getrennten Geräten sein, welche die vorangehend beschriebenen Eigenschaften und Ressourcen in der Summe aufweisen und miteinander Daten austauschen können.

Um die Erfassung der relevanten Parameter zu erleichtern, kann die Messeinrichtung auch mit der Aufzugssteuerung der bestehenden Aufzugsanlage verbunden sein. Hierdurch ist die Messeinrichtung in der Lage, charakterisierende Eigenschaften aus der Aufzugssteuerung zu extrahieren und an die programmierbare Vorrichtung des Systems zu übertragen.

Zusammenfassend kann gesagt werden, dass das Computerprogrammprodukt maschinenlesbare Programmanweisungen umfasst, welche bei Ausführung auf einer programmierbaren Vorrichtung die Vorrichtung zum Durchführen oder Steuern der weiter oben beschriebenen Ausführungen des erfindungsgemässen Verfahrens veranlassen.

Das Computerprogrammprodukt kann auf einem beliebigen computerlesbaren Medium gespeichert sein, beispielsweise einem Flash-Speicher, einer CD, einer DVD, RAM, ROM, PROM, EPROM, einer Diskette und dergleichen mehr. Das Computerprogrammprodukt und/oder die damit zu verarbeitenden Daten können auch auf einem Server oder mehreren Servern gespeichert sein, beispielsweise in einer Datenwolke, von wo aus sie über ein Netz, beispielsweise das Internet, heruntergeladen werden können.

Abschließend wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen, wobei die Erfindung durch die beigefügten Ansprüche definiert ist.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Figur 1:: schematisch in dreidimensionaler Ansicht eine bestehende oder modernisierte Aufzugsanlage, wobei deren Aufzugsschacht der besseren Übersicht wegen nur schematisch dargestellt ist und die mit der Aufzugsanlage zu verbindenden Stockwerke nur mit unterbrochener Linie angedeutet sind;
- Figur 2A bis 2D:: schematisch Verfahrensschritte zur Erstellung eines dreidimensionalen Digitaler-Doppelgänger-Datensatzes einer modernisierten Aufzugsanlage oder der in der Figur 1 dargestellten, bestehenden Aufzugsanlage;
- Figur 3:: schematisch in dreidimensionaler Ansicht die wesentlichen, Komponenten eines Systems, das zur Durchführung des in den Figuren 2A bis 2D dargestellten Verfahrens geeignet ist;
- Figur 4:: schematisch verschiedene Geschwindigkeitsprofile eines bestimmten Stockwerkabschnittes, wobei mittels einer Optimierungsroutine nach vorgebbaren Qualitätskriterien der optimale Parametersatz der Aufzugssteuerung für diesen Stockwerkabschnitt in der Simulationsumgebung des dreidimensionalen Digitaler-Doppelgänger-Datensatzes ermittelt wird.

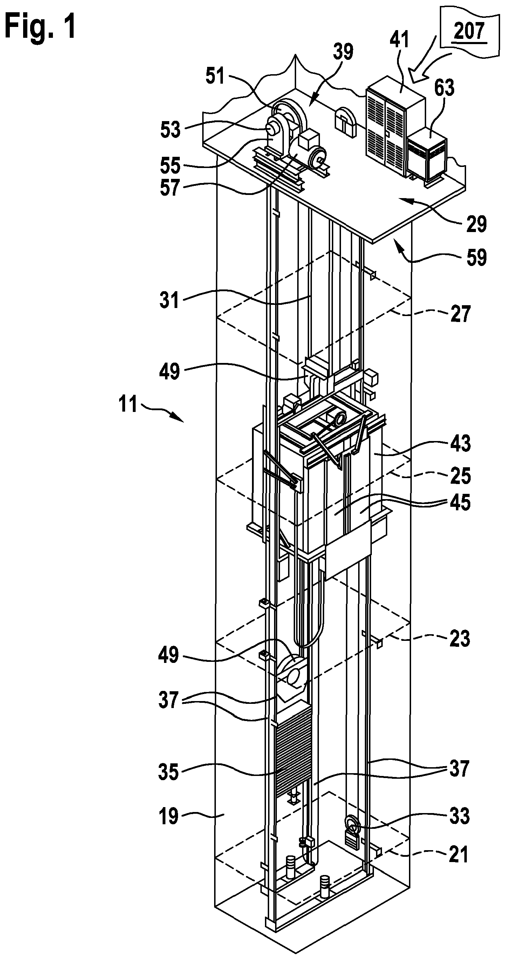

Die Figur 1 zeigt schematisch in dreidimensionaler Ansicht eine bestehende oder modernisierte Aufzugsanlage 11, wobei deren Aufzugsschacht 19 der besseren Übersicht wegen nur schematisch dargestellt ist und die bauseitig erstellten, mit der Aufzugsanlage 11 zu verbindenden Stockwerke 21, 23, 25, 27 nur mit unterbrochener Linie angedeutet sind.

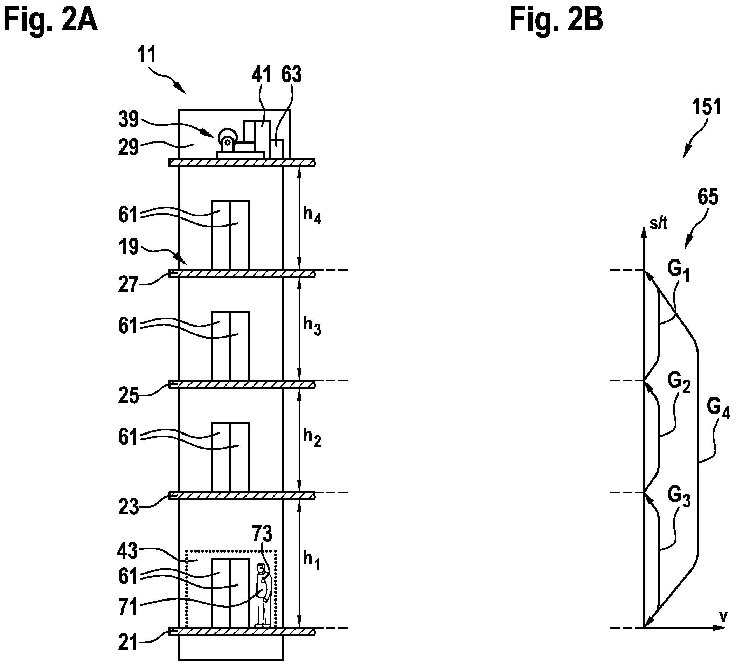

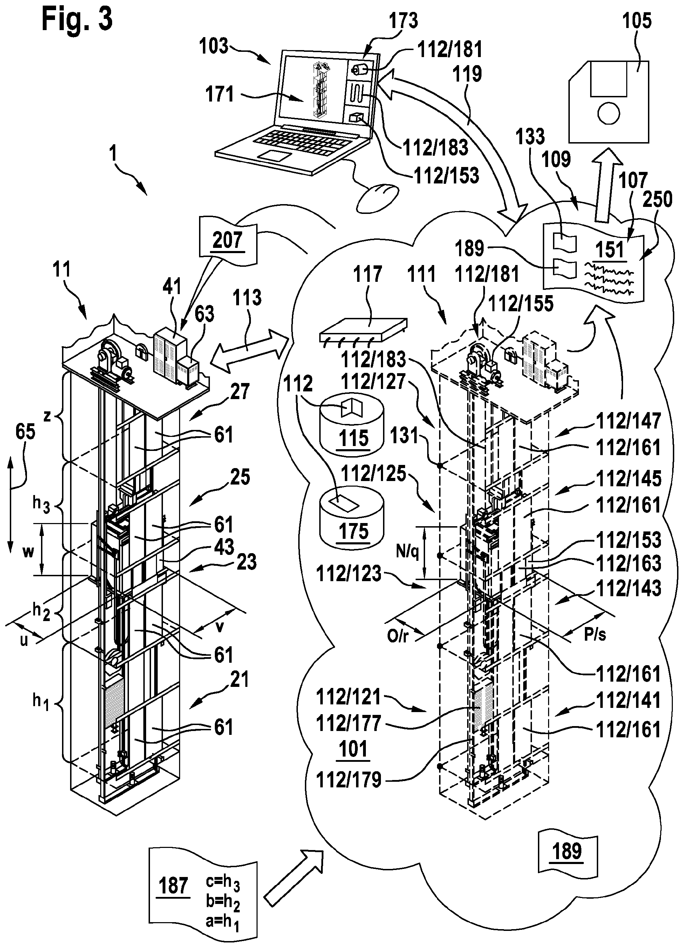

Die Aufzugsanlage 11 besteht aus vielen verschiedenen Komponenten, die im üblicherweise bauseitig erstellten Aufzugsschacht 19 angeordnet sind. Zu diesen gehören auch alle in diesem Absatz aufgeführten Komponenten, wie beispielsweise an den Wänden des Aufzugschachtes 19 montierte Führungsschienen 37, eine an den Führungsschienen 37 geführte Aufzugskabine 43 und ein an den Führungsschienen 37 geführtes Gegengewicht 35. Das Gegengewicht 35 ist durch ein Tragmittel 31, beispielsweise ein Stahlseil oder ein Riemen mit der Aufzugskabine 43 lasttragend verbunden. Das Tragmittel 31 ist im vorliegenden Ausführungsbeispiel in einer sogenannten 2:1 Tragmittelanordnung über Umlenkrollen 49 und eine Treibscheibe 51 geführt. Selbstverständlich sind auch andere Tragmittelführungsvarianten wie eine 1:1, 3:1 und dergleichen mehr möglich. Die Treibscheibe 51 wird durch eine Antriebseinheit 39 angetrieben, welche üblicherweise eine Betriebsbremse 53, ein Untersetzungsgetriebe 55 und einen Antriebsmotor 57 umfasst. Der Antriebsmotor 57 wird hierbei durch eine Aufzugssteuerung 41 angesteuert. Im vorliegenden Ausführungsbeispiel sind die Antriebseinheit 39 und die Aufzugssteuerung 41 in einem Maschinenraum 29 angeordnet, der sich genau über dem Schachtkopf 59 des Aufzugsschachtes 19 befindet. Die Aufzugskabine 43 weist Kabinentüren 45 auf, die mit auf den Stockwerken 21, 23, 25, 27 angeordneten Schachttüren 61 (siehe Figuren 2A und 3) temporär koppelbar sind. Zudem sind Sicherheitseinrichtungen 33 vorhanden, die die korrekte Arbeitsweise der bestehenden Aufzugsanlage überwachen.

Je nach Ausgestaltung der Aufzugsanlage 11 können Lärmprobleme beziehungsweise Schwingungsprobleme auftreten, wenn der Parametersatz 207 der Aufzugssteuerung 41 nicht optimal auf die Konfiguration der Aufzugsanlage 11 ausgelegt ist. Massgeblich werden solche Lärmprobleme durch ein Zusammenwirken der elastischen und geometrischen Eigenschaften des Tragmittels 31, durch die von der Aufzugskabine 43 auf das Tragmittel 31einwirkende Last beziehungsweise Kraft und durch ein Geschwindigkeitsprofil der Aufzugskabine 43, welches durch den Parametersatz 207 der Aufzugssteuerung 41 vorgegeben wird, verursacht. Zu den geometrischen Eigenschaften gehört auch die Tragmittellänge, wobei nicht die Totallänge des Tragmittels 31 massgebend ist, sondern dessen Teilabschnitte, die sich im dargestellten Ausführungsbeispiel, zwischen den Umlenkrollen 49 erstrecken.

Anhand der Figuren 2A bis 2D werden nachfolgend mögliche Verfahrensschritte des erfindungsgemässen Verfahrens 151 zur Optimierung von Steuerungsdaten einer bestehenden oder modernisierten Aufzugsanlage 11 sowie einer damit einhergehenden Erstellung eines dreidimensionalen Digitaler-Doppelgänger-Datensatzes 111 der in der Figur 1 dargestellten, bestehenden oder modernisierten Aufzugsanlage 11 erklärt. Hierbei zeigt die Figur 2A nochmals die bestehende oder modernisierte Aufzugsanlage 11 in vereinfachter Weise, wobei nur die Aussenkonturen des Aufzugschachtes 19, die Böden der Stockwerke 21, 23, 25, 27, die Aufzugskabine 43 und die Schachttüren 61 sowie der Maschinenraum 29 dargestellt sind.

Gemäss einer möglichen Ausgestaltung der Erfindung wird wie die Figur 2B zeigt, durch mindestens eine Messfahrt 65 mit der Aufzugskabine 43 der bestehenden Aufzugsanlage 11 jedes Stockwerk 21, 23, 25, 27 der Aufzugsanlage 11 zumindest einmal angefahren und mittels einer Messeinrichtung 63 zumindest diejenigen Messdaten G1, G2, G3, G4, h1, h2, h3 erfasst, die Stockwerkhöhen h1, h2, h3 repräsentieren. Im vorliegenden Ausführungsbeispiel ist die Messeinrichtung 63 ein Datenaufzeichnungsgerät, welches die Messdaten G1, G2, G3, G4, h1, h2, h3 von der Aufzugssteuerung 41 empfängt oder aus Steuersignalen und an die Aufzugssteuerung 41 übermittelten Sensordaten von in der Aufzugsanlage 11 verbauten Sensoren extrahiert und abspeichert, beziehungsweise diese Messdaten G1, G2, G3, G4, h1, h2, h3 weiterleiten kann. Hierzu kann die Messeinrichtung 63 über ein geeignetes Computerprogramm verfügen, welches auf die Aufzugssteuerung 41 der bestehenden Aufzugsanlage 11 einwirkt und die erforderliche Messfahrt 65 veranlasst. Hierbei können beispielsweise die Stockwerkhöhen h1, h2, h3 direkt als Messdaten h1, h2, h3 aus den Steuersignalen der Aufzugssteuerung 41 ausgelesen werden, die beispielsweise von einem nicht dargestellten Schachtinformationssystem der bestehenden Aufzugsanlage 11 an die Aufzugssteuerung 41 übermittelt werden. Ferner können die Bewegungsprofile als Messdaten G1, G2, G3, G4 erfasst werden. Da diese die Geschwindigkeit V der Aufzugskabine 43 über die Zeit t wiedergeben, können aus diesen Messdaten G1, G2, G3, G4 selbstverständlich auch die Stockwerkhöhen h1, h2, h3 berechnet werden.

Selbstverständlich kann die Messfahrt 65 auch durchgeführt werden, ohne dass dazu Messdaten G1, G2, G3, G4, h1, h2, h3 aus der Aufzugssteuerung 41 der bestehenden Aufzugsanlage 11 ausgelesen werden. Hierzu kann beispielsweise ein Techniker 71 mit seinem Mobiltelefon (Smartphone) die Aufzugskabine 43 betreten und die Messfahrt 65 mit der bestehenden Aufzugsanlage 11 durchführen. Dabei zeichnet das Mobiltelefon als Messeinrichtung 73 das Beschleunigungs- und Verzögerungsprofil sowie die Fahrzeit von Stockwerk zu Stockwerk beziehungsweise die Bewegungsprofile als Messdaten G1, G2, G3, G4 auf. Vorzugsweise legt er bei der Messfahrt 65 das Mobiltelefon beziehungsweise die Messeinrichtung 73 auf den Boden der Aufzugskabine 43, um die Messdaten G1, G2, G3, G4 nicht zu verfälschen. Aus diesen Messdaten G1, G2, G3, G4 können wiederum die Stockwerkhöhen h1, h2, h3 der einzelnen Stockwerke 21, 23, 25, 27 errechnet werden.

Gemäss einer weiteren möglichen Ausgestaltung der Erfindung kann ein dreidimensionaler Digitaler-Doppelgänger-Datensatz 111 auch auf der Basis einer modernisierten Aufzugsanlage 11 erstellt werden. Hierbei werden die zur Planung erforderlichen kundenspezifischen Konfigurierungsdaten 178 herangezogen, welche kundenseitig oder in Zusammenarbeit mit dem Kunden erstellt worden sind. Logischerweise müssen die Anzahl Stockwerke 21, 23, 25, 27 sowie deren Stockwerkhöhen h1, h2, h3 nicht mittels einer Messfahrt 65 ermittelt werden, sondern sind direkt den kundenspezifischen Konfigurierungsdaten 178 entnehmbar.

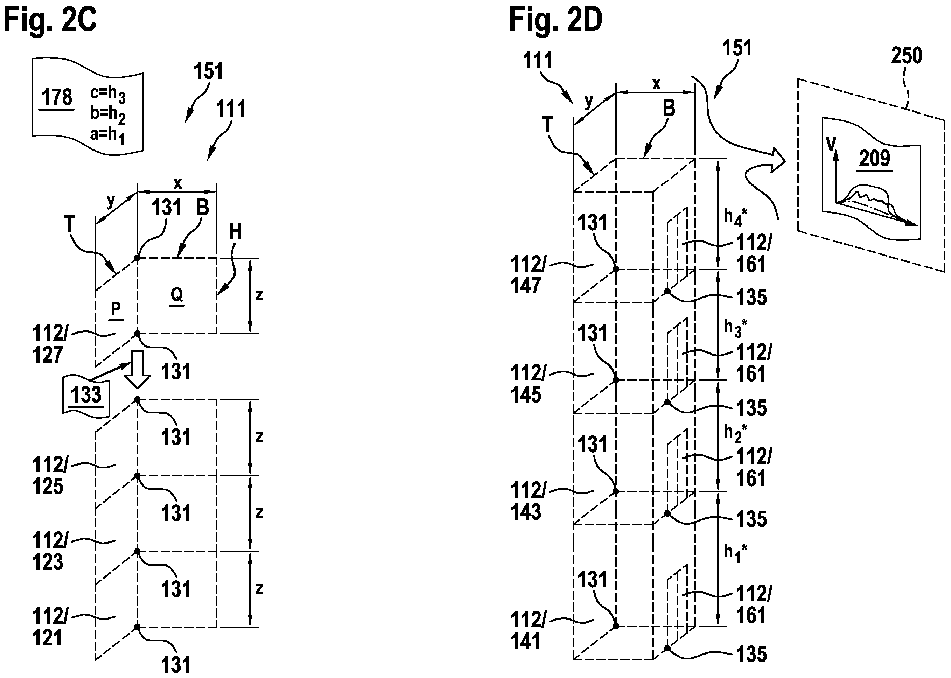

Wie in der Figur 2C dargestellt ist, kann unter Berücksichtigung dieser Messdaten G1, G2, G3, G4, h1, h2, h3 oder der kundenspezifischen Konfigurierungsdaten 178 ein dreidimensionaler Digitaler-Doppelgänger-Datensatz 111 schrittweise aus Bauteilmodell-Datensätzen 112 aufgebaut und in einem Speichermedium 101 (siehe Figur 3) gespeichert werden. Die Bauteilmodell-Datensätze 112 können unterschiedliche Konfigurationen aufweisen und sind durch charakterisierende Eigenschaften B, T, H definiert, wobei jede charakterisierende Eigenschaft durch einen Vorgabe-Wert x, y, z vordefiniert, durch einen Soll-Wert a, b, c vorgegeben, oder durch einen Ist-Wert q, r, s (siehe Figur 3) bestimmt ist.

Die das Wesen der Bauteilmodell-Datensätze 112 definierenden, charakterisierenden Eigenschaften B, T, H können beispielsweise geometrische Abmessungen der durch sie abgebildeten Bauteile, Gewichte der durch sie abgebildeten Bauteile, Materialeigenschaften der durch sie abgebildeten Bauteile und/oder Oberflächenbeschaffenheiten der durch sie abgebildeten Bauteile sein. Selbstverständlich können auch dynamische Informationen wie die bereits erwähnten Bewegungsprofile als charakterisierende Eigenschaften einem Bauteilmodell-Datensatz 112 zugeordnet werden und dessen dynamisches Verhalten charakterisieren. Mit anderen Worten können mehrere verschiedenartige charakterisierende Eigenschaften B, T, H von einem Bauteil oder von mehreren Bauteilen der Aufzugsanlage 11 ermittelt werden und als Messdaten G2, G3, G4, h1, h2, h3 oder aus kundenspezifischen Konfigurierungsdaten 187 abgeleitete Daten a, b, c in dem dreidimensionaler Digitaler-Doppelgänger-Datensatz 111 abgelegt werden. Geometrische Abmessungen der Bauteile können beispielsweise eine Länge, eine Breite, eine Höhe, eine Tiefe, ein Querschnitt, Radien, Verrundungen, etc. der Bauteile sein. Materialeigenschaften der Bauteile können beispielsweise eine zur Bildung eines Bauteils oder eines Teilbereichs eines Bauteils verwendete Materialart sein. Ferner können Materialeigenschaften auch Festigkeitseigenschaften, Härteeigenschaften, elektrische Eigenschaften, magnetische Eigenschaften, optische Eigenschaften elastische Eigenschaften, etc. der Bauteile sein. Oberflächenbeschaffenheiten der Bauteile können beispielsweise Rauigkeiten, Texturen, Beschichtungen, Farben, Reflektivitäten, etc. der Bauteile sein. Die charakterisierenden Eigenschaften B, T, H können sich auf einzelne Bauteile oder Bauteilgruppen beziehen. Beispielsweise können sich die charakterisierenden Eigenschaften B, T, H auf einzelne Bauteile beziehen, aus denen größere, komplexere Bauteilgruppen zusammengesetzt werden. Alternativ oder ergänzend können sich die charakterisierenden Eigenschaften B, T, H auch auf aus mehreren Bauteilen zusammengesetzte komplexere Gerätschaften wie zum Beispiel Antriebsmotoren, Getriebeeinheiten, Tragmittel, etc. beziehen.

Um den dreidimensionaler Digitaler-Doppelgänger-Datensatz 111 aufzubauen, kann beispielsweise für jedes Stockwerk 21, 23, 25, 27 der Aufzugsanlage 11 in der erfassten, oder aus den kundenspezifischen Konfigurierungsdaten 187 hervorgehenden Reihenfolge jeweils ein als Stockwerkabschnitt-Bauteilmodell-Datensatz 121, 123, 125, 127 konfigurierter Bauteilmodell-Datensatz 112 in vertikaler Richtung übereinander angeordnet werden, wobei hierzu vorzugsweise Schnittstelleninformationen 131 am Stockwerkabschnitt-Bauteilmodell-Datensatz 121, 123, 125, 127 definiert sind, die beispielsweise mithilfe eines Regelsatzes 133 korrekt zueinander positioniert und zusammengefügt werden. Wie bereits erwähnt, sind Bauteilmodell-Datensätze 112 durch charakterisierende Eigenschaften B, T, H definiert und diese charakterisierenden Eigenschaften B, T, H wiederum durch Vorgabe-Werte x, y, z vordefiniert. Im vorliegenden Ausführungsbeispiel der Figur 2C werden die Stockwerkabschnitt-Bauteilmodell-Datensätze 121, 123, 125, 127 durch zwei rechtwinklig zueinander angeordnete Flächen P und Q definiert, wobei deren flächige Ausdehnungen jeweils durch die charakterisierenden Eigenschaften Breite B, Tiefe T, und Höhe H mit einem entsprechenden Vorgabe-Wert x, y, z vordefiniert sind. Dem entsprechend bildet dieser dreidimensionale Digitaler-Doppelgänger-Datensatz 111 beziehungsweise das so geschaffene, dreidimensional darstellbare, virtuelle Modell erst einmal nur die Anzahl Stockwerke 21, 23, 25, 27 der Aufzugsanlage 11 korrekt ab.

Wie die Figur 2D zeigt, wird der dreidimensionale Digitaler-Doppelgänger-Datensatz 111 beziehungsweise dieses dreidimensional darstellbare, virtuelle Modell nun schrittweise verfeinert und präzisiert, indem der Vorgabe-Wert z der charakterisierenden Eigenschaft Höhe H, eines jeden Stockwerkabschnitt-Bauteilmodell-Datensatzes 121, 123, 125, 127 die den Höhenabstand zum nächsten Stockwerkabschnitt- Bauteilmodell-Datensatz definiert, durch die entsprechenden, aus den Messdaten G1, G2, G3, G4, h1, h2, h3 oder den kundenspezifischen Konfigurierungsdaten 187 ermittelten Stockwerkhöhen h1, h2, h3 ersetzt wird. Anhand der in Figur 2D dargestellten Stockwerkhöhen h1, h2, h3 ist ersichtlich, dass sich diese zu den Vorgabe-Werten x, y, z der Figur 2C sowie auch untereinander deutlich unterscheiden.

Ferner ist ersichtlich, dass die Stockwerkhöhe h4 des obersten Stockwerkes 27 einer bestehenden Aufzugsanlage 11 nicht durch die mittels einer Messfahrt 65 ermittelten Messdaten G1, G2, G3, G4, h1, h2, h3 berechnet beziehungsweise definiert werden kann. Diese Stockwerkhöhe h4 muss beispielsweise der Techniker händisch ausmessen und als Messdaten h4 erfassen oder dessen Vorgabe-Wert z bleibt vorerst beibehalten, bis weitere Messdaten zu dieser charakterisierenden Eigenschaft Höhe H des obersten Stockwerkes 27 vorliegen. Bei modernisierten Aufzugsanlagen kann der Soll-Wert für diese Stockwerkhöhe h4 aus den kundenspezifischen Konfigurierungsdaten 187 ermittelt werden. Diejenigen charakterisierenden Eigenschaften B, T, H, deren Vorgabe-Werte x, y, z durch Messdaten G1, G2, G3, G4, h1, h2, h3 oder Soll-Werte h4 ersetzt wurden, können wie im vorliegenden Ausführungsbeispiel symbolisch mit einem Stern als h1^{∗}, h2*, h3*, h4* dargestellt, mit einer Kennzeichnung versehen werden. Eine solche Kennzeichnung * kann ein Code-Abschnitt, ein Präfix, ein Suffix und dergleichen mehr sein.

Wie vorangehend erörtert, weist jeder Stockwerkabschnitt-Bauteilmodell-Datensatz 121, 123, 125, 127 vordefinierte Schnittstellen 131 auf. Diese dienen nicht nur bei der Zusammenfügung der Stockwerkabschnitt-Bauteilmodell-Datensätze 121, 123, 125, 127 als gegenseitige Positionierungspunkte, sondern auch als Schnittstellen 131 bei der Anfügung weiterer Bauteilmodell-Datensätze 112. An diese Schnittstellen 131 kann nun wie die Figur 2D zeigt, jeweils auch ein als Schachtabschnitt-Bauteilmodell-Datensatz 141, 143, 145, 147 konfigurierter Bauteilmodell-Datensatz 112 angefügt werden. Dabei wird jeweils der Vorgabe-Wert x, y, z einer charakterisierenden Eigenschaft B, T, H des mit dessen Schnittstellen 131 verbundenen Schachtabschnitt-Bauteilmodell-Datensatzes 141, 143, 145, 147, welche die Schachtabschnittshöhe definiert, durch die entsprechende Stockwerkhöhe h1, h2, h3, h4 des Stockwerkabschnitt-Bauteilmodell-Datensatzes 121, 123, 125, 127 ersetzt beziehungsweise repliziert.

Selbstverständlich besteht auch die Möglichkeit, anstelle der vorangehend beschriebenen Stockwerkabschnitt-Bauteilmodell-Datensätze 121, 123, 125, 127, als Bauteilmodell-Datensätze 112 direkt einen Schacht-Bauteilmodell-Datensatz oder mehrere Schacht-Bauteilmodell-Datensätze 141, 143, 145, 147 zu verwenden. Diese weisen vorzugsweise ebenfalls die charakterisierenden Eigenschaften B, T, H im Sinne der Stockwerkabschnitt-Bauteilmodell-Datensätze 121, 123, 125, 127 und die Schnittstellen 131 auf, um den dreidimensionalen Digitaler-Doppelgänger-Datensatz 111 korrekt erstellen zu können und zumindest die Anzahl Stockwerke und die Stockwerkhöhen h1, h2, h3, z korrekt wiederzugeben.

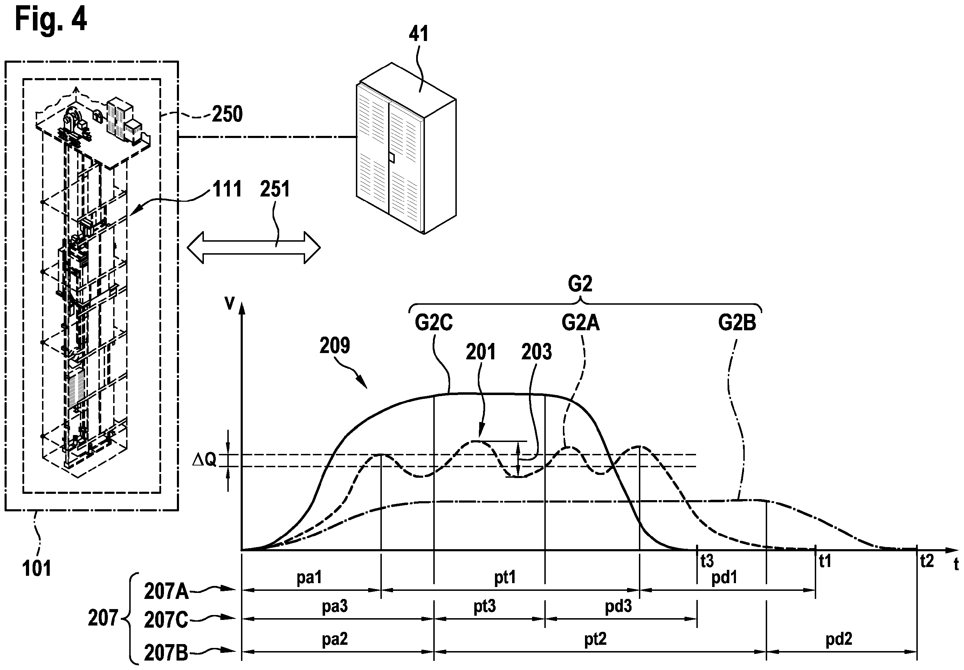

Grundsätzlich kann jeder Bauteilmodell-Datensatz 112 seiner Konfiguration entsprechend mehrere Schnittstellen 131, 135 zur Anfügung weiterer Bauteilmodell-Datensätze 112 aufweisen. So können zum Beispiel die Schachtabschnitt-Bauteilmodell-Datensätze 141, 143, 145, 147 nebst der zu den Stockwerkabschnitt-Bauteilmodell-Datensätzen 141, 143, 145, 147 und/oder zueinander passenden Schnittstellen 131 auch Schnittstellen 135 für Schachttür-Bauteilmodell-Datensätze 161 aufweisen. Informationen, welche Bauteilmodell-Datensätze 112 an welchen Schnittstellen 131, 135 anderer Bauteilmodell-Datensätze 112 angeordnet werden, können im Regelsatz 133 des weiter unten beschriebenen Computerprogrammproduktes 109 hinterlegt sein. Dieser Regelsatz 133 definiert wie eine übergeordnete Stückliste und Bauanleitung den Aufbau des dreidimensionalen Digitaler-Doppelgänger- Datensatzes 111. Wie in der Figur 2D angedeutet, kann nun ein ausreichend definierter, erstellter dreidimensionaler Digitaler-Doppelgänger- Datensatz 111 als Simulationsumgebung 250 zur Optimierung von Steuerungsdaten beispielsweise unter Anwendung der in der Figur 4 detaillierter beschriebenen Optimierungsroutine 209 verwendet werden.

Die Simulationsumgebung 250 wird im Wesentlichen durch den dreidimensionalen Digitaler-Doppelgänger-Datensatz 111 gebildet. Jedoch können zusätzliche Datensätze erforderlich sein, um den dreidimensionalen Digitaler-Doppelgänger-Datensatz 111 in einen sogenannten «lauffähigen Zustand» zu bringen, damit er als Simulationsumgebung 250 für statische und dynamische Simulationen verwendbar ist. Solche zusätzlichen Datensätze können Speicheranweisungen, Bilddarstellungsanweisungen, Simulationsanweisungen, Kommunikationsanweisungen mit Ausgabe- und Eingabeeinheiten, Kompilierungsanweisungen, Schnittstellenprotokolle und dergleichen mehr sein. Auch diese Datensätze können Teil des Computerprogrammproduktes 109 sein und können zumindest Teilschritte des erfindungsgemässen Verfahrens 151 umsetzen.

Die Figur 3 zeigt schematisch in dreidimensionaler Ansicht die wesentlichen, Komponenten eines Systems 1, das zur Durchführung des in den Figuren 2A bis 2D dargestellten Verfahrens 151 geeignet ist. Dieses System 1 zur Optimierung von Steuerungsdaten einer Aufzugssteuerung 41 im Hinblick auf eine zugeordnete bestehende oder modernisierte Aufzugsanlage 11 kann im Wesentlichen die folgenden Systemteile aufweisen:
- eine programmierbare Vorrichtung 101 und
- ein Computerprogrammprodukt 109 mit maschinenlesbaren Programmanweisungen 107.

Zusätzlich kann das System 1 noch mindestens eine Messeinrichtung 63 aufweisen, mittels der durch mindestens eine Messfahrt 65 mit der bestehenden Aufzugsanlage 11 zumindest diejenigen Messdaten h1, h2, h3 erfassbar sind, aus denen Stockwerkhöhen h1, h2, h3 der Stockwerke 21, 23, 25, 27 der Aufzugsanlage 11 ermittelbar sind.

Wie bereits in der Beschreibung zur Figur 2 erwähnt, greift die Messeinrichtung 63 des dargestellten Ausführungsbeispiels auf Messdaten G1, G2, G3, G4, h1, h2, h3 der Aufzugssteuerung 41 der bestehenden Aufzugsanlage 11 zu und übermittelt diese, symbolisch durch den Doppelpfeil 113 dargestellt, an die programmierbare Vorrichtung 101.

Die programmierbare Vorrichtung 101 kann ein Einzelgerät wie beispielsweise ein Personal Computer, ein Laptop, Ein Mobiltelefon, ein Tablet, die Aufzugssteuerung 41 der bestehenden Aufzugsanlage 11 oder dergleichen mehr sein. Die programmierbare Vorrichtung 101 kann aber auch einen oder mehrere Computer umfassen. Insbesondere kann die programmierbare Vorrichtung 101 wie in der Figur 3 dargestellt, aus einem Computernetzwerk gebildet sein, welches Daten in Form einer Datenwolke (Cloud) verarbeitet. Die programmierbare Vorrichtung 101 kann hierfür über ein Speichermedium 115 verfügen, in dem die Daten des Digitaler-Doppelgänger-Datensatzes 111 und die zu dessen Erstellung erforderlichen Bauteilmodell-Datensätze 112 verschiedener Konfiguration gespeichert werden können, beispielsweise in elektronischer oder magnetischer Form. Die programmierbare Vorrichtung 101 kann ferner über Datenverarbeitungsmöglichkeiten verfügen. Beispielsweise kann die programmierbare Vorrichtung 101 einen Prozessor 117 aufweisen, mithilfe dessen Daten all dieser Bauteilmodell- Datensätze 112 und die maschinenlesbaren Programmanweisungen 107 des Computerprogrammprodukts 109, insbesondere auch Programmanweisungen zur Optimierung der Steuerungsdaten beziehungsweise zur Generierung eines auf den dreidimensionalen Digitaler-Doppelgänger-Datensatz 111 abgestimmten Parametersatzes 207 mit Parametern pa, pt, pd (siehe Figur 4) verarbeitet werden können. Der optimierte Parametersatz 207 lässt sich hernach in der Aufzugsteuerung 63 implementieren.

Die programmierbare Vorrichtung 101 kann ferner über die symbolisch durch den Doppelpfeil 119 dargestellte Geräteschnittstellen verfügen, über die Daten in die programmierbare Vorrichtung 101 eingegeben und/oder aus der programmierbaren Vorrichtung 101 ausgegeben werden können. Die programmierbare Vorrichtung 101 kann auch räumlich verteilt implementiert sein, beispielsweise wenn Daten über mehrere Computer verteilt in einer Datenwolke (Cloud) verarbeitet werden.

Insbesondere kann die programmierbare Vorrichtung 101 programmierbar sein, das heißt durch ein geeignet programmiertes Computerprogrammprodukt 109 dazu veranlasst werden, Computer- verarbeitbare Schritte und Daten des erfindungsgemäßen Verfahrens 151 auszuführen oder zu steuern. Das Computerprogrammprodukt 109 kann Anweisungen oder Code enthalten, welche beispielsweise den Prozessor 117 der programmierbaren Vorrichtung 101 dazu veranlassen, Daten des dreidimensionalen Digitaler-Doppelgänger-Datensatzes 111 zu erstellen, abzuspeichern, auszulesen, zu verarbeiten, zu modifizieren, eine Simulationsumgebung 250 auf Basis des dreidimensionalen Digitaler- Doppelgänger-Datensatzes 111 zu errichten, Optimierungsroutinen 209 durchzuführen etc. Insbesondere kann das Computerprogrammprodukt 109 in einer beliebigen Computersprache verfasst sein.

Die maschinenlesbaren Programmanweisungen 107 des Computerprogrammproduktes 109 geben insbesondere auch die in den Figuren 2A bis 2D beispielhaft dargestellten Verfahrensschritte des erfindungsgemässen Verfahrens 151 in maschinen-verarbeitbarer Weise wieder. Ferner können die maschinenlesbaren Programmanweisungen 107 eine Vielzahl anderer Programmroutinen aufweisen, wie beispielsweise verschiedene Umrechnungsroutinen zur Ermittlung einer Stockwerkhöhe h1, h2, h3 aus einem Bewegungsprofil G1, G2, G3, G4 (siehe Figur 2B), Steuerungsroutinen zur Steuerung der Interaktionen zwischen der Aufzugssteuerung 41 und der Messeinrichtung 63, Zuordnungsroutinen, welche die Anordnung von Bauteilmodell-Datensätzen 112 auf ihre Kompatibilität überprüfen, Regelsätze 133 (siehe auch Figur 2C), Kollisionsüberprüfungsroutinen, welche statische und dynamische charakterisierende Eigenschaften der im dreidimensionalen Raum angeordneten Bauteilmodell-Datensätze 112 zueinander überprüfen, Übermittlungsprotokolle, Steuerungsroutinen zu den Geräteschnittstellen, Anweisungsroutinen für den Techniker und dergleichen mehr.

Durch das Ausführen des Computerprogrammprodukts 109 auf der programmierbaren Vorrichtung 101, ist unter Berücksichtigung der durch die Messeinrichtung 63 erfassten Messdaten ein dreidimensionaler Digitaler-Doppelgänger-Datensatz 111 aus Bauteilmodell-Datensätzen 112 aufbaubar und im Speichermedium 115 der programmierbaren Vorrichtung 101 speicherbar. Hierbei können die Bauteilmodell-Datensätze 112 unterschiedliche Konfigurationen aufweisen und beispielsweise als Stockwerkabschnitt-Bauteilmodell-Datensatz 121, 123, 125, 127, Schachtabschnitt-Bauteilmodell-Datensatz 141, 143, 145, 147, Aufzugskabinen-Bauteilmodell-Datensatz 153, Kabinentür-Bauteilmodell-Datensatz 163, Schachttür-Bauteilmodell-Datensatz 161 Antrieb-Bauteilmodell-Datensatz 155 und dergleichen mehr ausgestaltet und durch charakterisierende Eigenschaften N, O, P, definiert sein, die mit Vorgabe-Werten q, r, s vordefiniert sind.

Für jedes durch die Messfahrt 65 erfasste Stockwerk 21, 23, 25, 27 einer bestehenden Aufzugsanlage 11 wird in der erfassten Reihenfolge im durch die programmierbare Vorrichtung 101 erstellten dreidimensionaler Digitaler-Doppelgänger-Datensatz 111 jeweils ein als Stockwerkabschnitt-Bauteilmodell-Datensatz 121, 123, 125, 127 konfigurierter Bauteilmodell-Datensatz 112 in vertikaler Richtung übereinander angeordnet Bei einer modernisierten Aufzugsanlage 11 werden hierzu die kundenspezifischen Konfigurierungsdaten 187 herangezogen. Wie in den Figuren 2A bis 2D dargestellt, wird jeweils der Vorgabe-Wert z von dessen charakterisierender Eigenschaft H, die den Höhenabstand zum nächsten Stockwerkabschnitt- Bauteilmodell-Datensatz definiert, durch die entsprechende, aus den Messdaten G1, G2, G3, G4, h1, h2, h3 ermittelte Stockwerkhöhe h1, h2, h3 ersetzt.

Des Weiteren kann ein als Aufzugskabinen-Bauteilmodell-Datensatz 153 konfigurierter Bauteilmodell-Datensatz im durch mindestens einen Schacht-Bauteilmodell-Datensatz 141, 143, 145, 147 gebildeten, virtuellen Schacht angeordnet werden. Hierbei können auch die einzelnen, durch die Simulation errechnete Bewegungsprofile beziehungsweise Parameter pa, pt, pd dem Aufzugskabinen-Bauteilmodell-Datensatz 153 in der Rangordnung der Stockwerk-Bauteilmodell-Datensätze 121, 123, 125, 127 als charakterisierende Eigenschaften zugeordnet werden. Das bedeutet, dass dem Aufzugskabinen-Bauteilmodell-Datensatz 153 dynamische Eigenschaften relativ zu den Schacht-Bauteilmodell-Datensätzen 141, 143, 145, 147 zugeordnet werden, so dass beispielsweise auf einem Bildschirm 171 der dreidimensionaler Digitaler-Doppelgänger-Datensatz 111 mit teils dynamischen beziehungsweise bewegbaren Bauteilmodell-Datensätzen 112 dargestellt werden kann.

Mit anderen Worten kann der dreidimensionale Digitaler-Doppelgänger-Datensatz 111 aus dem Speichermedium 115 abgerufen und als virtuelle Aufzugsanlage zumindest die Stockwerkhöhen der Stockwerke im richtigen Verhältnis zueinander wiedergebend, statisch und/oder dynamisch auf einem Bildschirm 171 dargestellt werden. Aufgrund der dynamischen Eigenschaften kann zudem die auf dem Bildschirm 171 durch den Aufzugskabinen-Bauteilmodell-Datensatz 153 dargestellte virtuelle Aufzugskabine innerhalb des durch die Schacht-Bauteilmodell-Datensätze 141, 143, 145, 147 gebildeten virtuellen Aufzugsschachts dieselben Bewegungen mit denselben Bewegungsrichtungen, denselben Beschleunigungen, Geschwindigkeiten und Verzögerungen durchführen, wie die Aufzugkabine 43 der bestehenden oder modernisierten Aufzugsanlage 11.

Ferner können durch den Techniker gemessene oder aus Plänen und CAD-Dateien extrahierte, räumliche Dimensionen der Aufzugskabine 43 als Messwerte u, v, w erfasst und die Vorgabe-Werte q, r, s der zugeordneten, charakterisierenden Eigenschaften N, O, P des Aufzugskabinen-Bauteilmodell-Datensatzes 153 durch die gemessenen räumlichen Dimensionen ersetzt werden, wobei mittels einer Kollisionsprüfungsroutine die Vorgabe-Werte x, y, z der charakterisierenden Eigenschaften T, B, H der Schachtabschnitt-Bauteilmodell-Datensätze 141, 143, 145, 147 oder des Schacht-Bauteilmodell-Datensatzes überprüft und bei kollidierenden Dimensionen entsprechende charakterisierende Eigenschaften T, B, H den zur Kollisionen führenden Überragungen der charakterisierenden Eigenschaften N, O, P des Aufzugskabinen-Bauteilmodell-Datensatzes 153 angepasst werden. Insbesondere der immer noch durch Vorgabe-Werte x, y definierte Querschnitt der Schachtabschnitt-Bauteilmodell-Datensätze 141, 143, 145, 147 kann für die tatsächlichen Abmessungen der Aufzugskabine 43 zu klein sein. Gegebenenfalls kann zu den Kabinenabmessungen standardmässig ein erforderliches Spiel zwischen den Kabinenwänden und den Schachtwänden addiert werden, um die den Schachtquerschnitt charakterisierenden Eigenschaften T, B der Schachtabschnitt-Bauteilmodell-Datensätze 141, 143, 145, 147 ausgehend von der Aufzugskabine 43 zu ermitteln.

Um die Erstellung des dreidimensionaler Digitaler-Doppelgänger-Datensatzes 111 noch weiter zu vereinfachen, können über ein Graphical-User-Interface 173 einer Eingabeschnittstelle/Ausgabeschnittstelle 103 wie beispielsweise den dargestellten Laptop, weitere Bauteilmodell-Datensätze 112 von Komponenten einer Aufzugsanlage aus einer Datenbank 175 ausgewählt und über vordefinierte Schnittstellen 131, 135 in den dreidimensionalen Digitaler-Doppelgänger-Datensatz 111 eingefügt werden. Zur Auswahl können in der Datenbank 175 als Bauteilmodell-Datensätze 112 abgebildete Komponenten bestehender Aufzugsanlagen 11 zur Verfügung stehen, wie beispielsweise verschiedene Gegengewicht-Bauteilmodell-Datensätze 177, Führungsschienen-Bauteilmodell-Datensätze 179, Schachttüren- Bauteilmodell-Datensätze 161, Kabinentüren- Bauteilmodell-Datensätze 163, Antriebs-Bauteilmodell-Datensätze 181 und Tragmittel-Bauteilmodell-Datensätze 183 in verschiedenen Tragmittelführungsvarianten.

Die aus der Datenbank 175 abrufbaren Bauteilmodell-Datensätze real bestehender Bauteile können komplett bestimmte, auf Messresultate basierende charakterisierende Eigenschaften N, O, P mit Ist-Werten haben. Zur weiteren Verbesserung des Digitaler-Doppelgänger-Datensatzes 111 können dessen Bauteilmodell-Datensätze 112, die gemischte, mit Ist-Werten u, v, w bestimmte und mit Vorgabe-Werten q, r, s vordefinierte charakterisierende Eigenschaften N, O, P aufweisen, durch einen definitiven Bauteilmodell-Datensatz 181, 183, 153 aus der Datenbank 175 mit bestimmten charakterisierenden Eigenschaften N, O, P ersetzt werden. Dies kann automatisiert erfolgen, indem die mit einer Kennzeichnung * versehenen charakterisierenden Eigenschaften N, O, P durch eine Austauschrutine 189 ausgelesen werden und anhand dieser gekennzeichneten, charakterisierenden Eigenschaften aus der Datenbank 175 mögliche, zu den charakterisierenden Eigenschaften N, O, P passende, definitive Bauteilmodell-Datensätze 181, 183, 153 real bestehender Komponenten von Aufzugsanlagen 11 ermittelt werden. Anschliessend kann aus diesen vorgeschlagenen definitiven Bauteilmodell-Datensätzen 181, 183, 153 der ersetzende Bauteilmodell-Datensatz 112 gegebenenfalls durch manuelle Eingaben ergänzend ausgewählt werden. Nach der Auswahl kann die Austauschrutine 189 automatisch den auszutauschenden Bauteilmodell-Datensatz 112 löschen und den ersetzenden Bauteilmodell-Datensatz 112 einfügen. Gegebenenfalls existieren an Bauteilen der bestehenden Aufzugsanlage 11 auch Erkennungszeichen wie Barcodes, Matrixcodes, RFID-Tags und dergleichen mehr, die durch geeignetes Erfassen im System 1 eine eindeutige Auswahl und Verwendung des dieses Bauteil wiedergebenden Bauteilmodell-Datensatzes 112 ermöglichen.

Das Computerprogrammprodukt 109 kann auf einem beliebigen computerlesbaren Medium 105 gespeichert werden beziehungsweise gespeichert sein.

Mittels der Figur 4 soll nachfolgend anhand verschiedener Geschwindigkeitsprofile G2A, G2B, G2C eines bestimmten Stockwerkabschnittes der bestehenden oder modernisierten Aufzugsanlage 11 (siehe Figuren 1bis 3) erklärt werden, wie durch eine Optimierungsroutine 209 nach vorgebbaren Qualitätskriterien ΔQ der optimale Parametersatz 207 für diesen Stockwerkabschnitt in der Simulationsumgebung 250 unter Verwendung des dreidimensionalen Digitaler-Doppelgänger-Datensatzes 111 ermittelt werden kann. Der Doppelpfeil 251 symbolisiert hierbei die Wechselwirkung zwischen der Optimierungsroutine 209 und der Simulationsumgebung 250.

Genaugenommen ist nur ein Parametersatz 207 zur Erzeugung eines optimalen Geschwindigkeitsprofils G2 für diesen Schachtabschnitt erforderlich. Um aber die verschiedenen Stadien des Parametersatzes 207 besser erklären zu können, wurden die Bezugszeichen der zusammengehörenden Merkmale «Geschwindigkeitsprofil G2» und «Parametersatz 207» alphanummerisch ergänzt.

Wie bereits ausführlich beschrieben, steht durch den dreidimensionalen Digitaler-Doppelgänger-Datensatz 111 der bestehenden oder modernisierten Aufzugsanlage 11 nun eine Simulationsumgebung 250 zur Verfügung, mittels der verschiede Zustände der bestehenden oder modernisierten Aufzugsanlage 11 dynamisch überprüft werden können. Das heisst, dass nicht mehr einfach Testresultate aus dem Versuchsturm extrapoliert werden müssen, sondern dass das Verhalten des in der Aufzugssteuerung 41 implementierten Parametersatzes 207 anhand der Wechselwirkungen der virtuell durch den dreidimensionalen Digitaler-Doppelgänger-Datensatz 111 zur Verfügung stehenden Bauteile beziehungsweise Bauteilmodell-Datensätze 112 überprüft und optimiert werden kann.

Damit die Optimierungsroutine 209 ausgeführt werden kann, muss die Aufzugssteuerung 41 der modernisierten oder bestehenden Aufzugsanlage 11 physisch vorhanden sein und wie durch die strichdoppelpunktierte Linie dargestellt, mit der programmierbaren Vorrichtung 101 verbunden sein. Auf der ebenfalls mit strichdoppelpunktierter Linie angedeuteten, programmierbaren Vorrichtung 101 ist die Simulationsumgebung 250 lauffähig vorhanden, die wiederum auf dem die Anlage abbildenden, dreidimensionalen Digitaler-Doppelgänger-Datensatz 111 basiert.

Das weiter oben erwähnte Lärmproblem einer Aufzugsanlage 11 erwächst beispielsweise aus einem Schwingungssystem von Aufzugskabine 43 und Tragmittel 31, dessen komplexe Zusammenhänge nachfolgend rudimentär erklärt werden.

Das Tragmittel 31 hat bestimmte elastische Eigenschaften in Längsrichtung und Querrichtung, ein bestimmtes, durch seinen Querschnitt vorgegebenes Flächenträgheitsmoment und eine längenabhängige Eigenmasse. Alle diese Merkmale sind ebenfalls im Tragmittel-Bauteilmodell-Datensatz 183 des Digitaler-Doppelgänger-Datensatzes 111 als charakterisierende Eigenschaften hinterlegt. Wie bereits weiter oben erwähnt, sind auch die Höhe des Aufzugschachtes 27 und die einzelnen Stockwerkhöhen h1, h2, h3, h4 im Digitaler-Doppelgänger-Datensatz möglichst präzise abgebildet. Auch das Leergewicht der Aufzugskabine 43 sowie deren maximal mögliche Zuladung können dem Aufzugskabinen-Bauteilmodell-Datensatz 153 als charakterisierende Eigenschaften zugeordnet sein.

Durch die Fahrt im Aufzugschacht 27 beziehungsweise im Aufzugschacht-Bauteilmodell-Datensatz 127 angeregt (beispielsweise durch als charakterisierende Eigenschaften hinterlegte Reibungsverhältnisse, die zwischen einem nicht dargestellten Führungsschuh-Bauteilmodell-Datensatz, der über Schnittstellen mit dem Aufzugskabinen-Bauteilmodell-Datensatz 153 verbunden ist und einem Führungsschienen-Bauteilmodell-Datensatz 179 auftreten), kann bei einer bestimmten Tragmittellänge die Eigenfrequenz dieses Schwingungssystems erreicht sein, so dass die Schwingungen des Tragmittels 31 quer zu seiner Längserstreckung in Resonanz geraten. Mittels der modernen, zur Verfügung stehenden Simulationsmethoden, welche beispielsweise Finite-Elemente-Analysen mit einschliessen, lassen sich im Sinne einer Optimierungsroutine 209 eine Vielzahl verschiedener Szenarien (unterschiedliche Beladung der Aufzugskabine, verschiedene Geschwindigkeitsprofile G2A, G2B, G2C, zusätzliche durch charakterisierende Eigenschaften definierte, äussere Einflüsse wie Temperatur, Feuchtigkeit, Luftdruck und dergleichen mehr) für jeden Schachtabschnitt dynamisch durchrechnen und simulieren, so dass für jeden dieser Schachtabschnitte sowie für Fahrten, die sich über mehrere Stockwerke 21, 23, 25, 27 erstrecken, ideale Geschwindigkeitsprofile G2A, G2B, G2C ermittelt werden können, die als Parametersätze 207 in der Aufzugssteuerung 41 gespeichert und durch diese verwendet werden können.

Optimierungsroutinen 209 sind vorzugsweise so programmiert, dass mit einem Parametersatz 207 eine Simulation in der Simulationsumgebung 250 durchgeführt wird, dann die Simulationsergebnisse unter Einbezug vorangehender Simulationsergebnisse durch verschiedene Analysemethoden (stochastische Methoden, Algorithmen, Fuzzy-Logic, etc.) bewertet werden und auf Basis dieser Analyseergebnisse der Parametersatz 207 verändert wird, um diesen wiederum in der Simulationsumgebung 250 zu testen. Diese sogenannten Optimierungs-, oder Testschlaufen werden solange fortgeführt, bis die Simulationsergebnisse den vorgebbaren Qualitätskriterien ΔQ genügen.

Im vorliegenden Ausführungsbeispiel der Figur 4 sind drei Geschwindigkeitsprofile G2A, G2B, G2C der Aufzugskabine 43, beziehungsweise von deren dynamisch bewegbarem Aufzugskabinen-Bauteilmodell-Datensatz 153 zwischen zwei bestimmten Stockwerken und somit für einen bestimmten Schachtabschnitt dargestellt. Das erste, mit unterbrochener Linie dargestellte Geschwindigkeitsprofil G2A zeigt die Fahrt der Aufzugskabine 43, 153 mit dem in der Aufzugssteuerung 41 als Grundeinstellung gespeicherten Parametersatz 207A. In diesem sind eine Beschleunigungsphase pa1, eine Fahrphase pt1 ohne wesentliche Beschleunigung oder Verzögerung, und eine Verzögerungsphase pd1 festgelegt. Bei der dynamischen Simulation einer Fahrt in der Simulationsumgebung 250 des zuvor erstellten Digitaler-Doppelgänger-Datensatzes 111, treten mit diesem Parametersatz 207A Schwingungen 201 auf, deren Amplituden 203 das als Qualitätskriterium ΔQ definierte Grenzband überschreiten. Die Folgen dieser Schwingungen sind Lärmprobleme in der Aufzugskabine 43.

Diese Probleme könnten beispielsweise durch einen geänderten Parametersatz 207B mit einer veränderten Beschleunigungsphase pa2 sowie mit eine Fahrphase pt2 mit tieferer Geschwindigkeit V behoben werden. Einen solchen Parametersatz 207B mit der Beschleunigungsphase pa2, der Fahrphase pt2 und der Verzögerungsphase pd2, der das durch eine strichpunktierte Linie dargestellte Geschwindigkeitsprofil G2B erwirkt, würde gegebenenfalls ein Techniker vor Ort nach etlichen Versuchen an der Aufzugsanlage 11 einstellen, um die Lärmprobleme zu beseitigen. Allerdings würde, wie die Grafik durch die beiden Fahrzeit-Enden t1, t2 zeigt, die Fahrzeit zwischen den beiden Stockwerken deutlich länger und dadurch die Aufzugsanlage 11 insgesamt spürbar langsamer.

Durch das erfindungsgemässe Verfahren können nun eine riesige Anzahl von Parametersätzen 207 durchsimuliert werden, was schlussendlich in einem Parametersatz 207C resultiert, der das dritte, durch eine ausgezogene Linie dargestellte Geschwindigkeitsprofil G2C erzeugt. Anders als der Techniker an der Anlage vor Ort, der beispielsweise nach zwei Versuchen mit stärkeren Beschleunigungsphasen (Zunahme der Beschleunigungskurven-Steilheit im Geschwindigkeits-Zeit-Diagramm) erkennt, dass die Amplituden 203 der Schwingungen noch stärker zunehmen und er daher diesen Pfad verlässt, können durch die Simulation an der Simulationsumgebung 250 schadlos noch stärkere Beschleunigungsphasen geprüft werden. Dadurch kann ein optimaler Parametersatz 207C ermittelt werden, bei dem in der Beschleunigungsphase pa3 die Zone der Eigenfrequenz des elastischen Systems von Aufzugskabine 43 und Tragmittel 31 in diesem Schachtabschnitt möglichst rasch durchschritten wird. Dadurch kann auch eine höhere Geschwindigkeit V in der Fahrphase pt3 erreicht werden. Je nach der Ausgestaltung der Verzögerungsphase pd3 wird die Fahrzeit t wie durch das Fahrzeit-Ende t3 dargestellt, kürzer. Um den Fahrkomfort der Benutzer zu erhöhen, kann gegebenenfalls die Verzögerungsphase pd3 auch so ausgestaltet und durch Simulationen überprüft werden, dass das Fahrzeit-Ende t3 gleich dem Fahrzeitende t1 ist.

Selbstverständlich können diese Simulationen im Sinne einer Optimierungsroutine 209 automatisiert oder zumindest teilautomatisiert durchgeführt werden. Das heisst, dass das Computerprogrammprodukt 109 so programmiert ist, dass es die durch die Simulationen erhaltenen Resultate automatisch mit den vorgegebenen Qualitätskriterien ΔQ vergleicht und mit den gebräuchlichen, allseits bekannten stochastischen Methoden, mit Fuzzy-Logic, etc. die Veränderungstendenzen der Simulationsergebnisse zur Festlegung des nächsten zur Simulation vorgesehenen Parametersatzes 207 anwendet. Sobald alle vorgegebenen Qualitätskriterien ΔQ durch das Simulationsergebnis eingehalten werden, kann die Optimierungsroutine 209 beendet, und die ermittelten Parameter pa3, pt3, pd3 in den für einen Betrieb in der Simulationsumgebung 250 abgestimmten Parametersatz 207 für die Aufzugssteuerung 41 der bestehenden oder modernisierten Aufzugsanlage 11 übernommen werden.

Mit anderen Worten wird der Parametersatz 207 mittels einer Optimierungsroutine 209 nach vorgebbaren Qualitätskriterien ΔQ in der Simulationsumgebung 250 ermittelt. Die vorgegebenen Qualitätskriterien ΔQ sind hierbei beispielsweise Toleranzangaben bezüglich der maximal zulässigen Schwingungsamplituden des Tragmittels 31, sowie für den Benutzer der Aufzugsanlage 11 angenehme Beschleunigungsphasen pa1, pa2, pa3 und Verzögerungsphasen pv1, pv2, pv3 der Aufzugskabine 43 bei einer möglichst kurzen Dauer der Fahrt. Auch internationale, regionale und nationale Normen wie beispielsweise die EN-81 können Qualitätskriterien ΔQ wie die maximal zulässige Beschleunigung, Verzögerungen, Wartezeiten, Türöffnungs- und Türschliesszeiten und dergleichen mehr festlegen. Alle diese, durch den Parametersatz 207 der Aufzugssteuerung 41 bestimmten Bewegungsabläufe der verschiedenen bewegbaren Komponenten einer bestehenden oder modernisierten Aufzugsanlage 11, können in der durch den dreidimensionalen Digitaler-Doppelgänger-Datensatz 111 verfügbaren Simulationsumgebung 250 simuliert, geprüft und optimiert werden.

Obwohl die vorliegende Erfindung in den Figuren 1 bis 4 am Beispiel einer einfachen bestehenden Aufzugsanlage 11 und anhand eines, diese abbildenden einfachen Digitaler-Doppelgänger-Datensatzes 111, welcher nur rudimentär mit wenigen Bauteilmodel-Datensätzen 112 aufgebaut ist, beschrieben wurde, ist es offensichtlich, dass das beschriebene Verfahren 151 und das entsprechende System 1 gleichermaßen auch für komplexer aufgebaute Aufzugsanlagen 11 Anwendung finden. Auch wenn nur eine Aufzugskabine 43 beschrieben und in den Figuren dargestellt ist, kann das erfindungsgemässe System 1 und das erfindungsgemässe Verfahren 151 selbstverständlich auch bei bestehenden und modernisierten Aufzugsanlagen 11 mit mehreren Aufzugskabinen 43 verwendet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Der Schutzumfang der Erfindung wird durch die beigefügten Ansprüche bestimmt. Bezugszeichen in den Ansprüchen sind nicht als Einschränkung anzusehen.

## Patentansprüche

1. Verfahren (151) zur Optimierung von Steuerungsdaten der Aufzugssteuerung (41) einer bestehenden oder modernisierten Aufzugsanlage (11), wobei die Aufzugssteuerung (41) an eine programmierbare Vorrichtung (101) angeschlossen wird, wobei auf die programmierbare Vorrichtung (101) ein, mittels eines Computerprogrammproduktes (109) erzeugbarer, dreidimensionaler Digitaler-Doppelgänger-Datensatz (111) als Simulationsumgebung (250) geladen wird, wobei der dreidimensionale Digitaler-Doppelgänger-Datensatz (111) die der Aufzugsteuerung (41) zugeordnete, bestehende oder modernisierte Aufzugsanlage (11) abbildet und simuliert, und wobei ein für einen Betrieb in der Simulationsumgebung (250) abgestimmter Parametersatz (207) für die Aufzugssteuerung (41) der bestehenden oder modernisierten Aufzugsanlage (11) durch Testen der Aufzugssteuerung (41) in der Simulationsumgebung (250) ermittelt wird, wobei der dreidimensionale Digitaler-Doppelgänger-Datensatz (111) der bestehenden oder modernisierten Aufzugsanlage (11) aus Bauteilmodell-Datensätzen (112) aufgebaut ist die unterschiedliche Konfigurationen aufweisen können und durch charakterisierende Eigenschaften (T, B, H) definiert sind, **dadurch gekennzeichnet, dass** durch mindestens eine Messfahrt (65) mit der bestehenden Aufzugsanlage (11) jedes Stockwerk (21, 23, 25, 27) der bestehenden oder zu modernisierenden Aufzugsanlage (11) zumindest einmal angefahren und dabei mittels einer Messeinrichtung (63) zumindest diejenigen Messdaten (G1, G2, G3, G4) erfasst werden, die Stockwerkhöhen (h1, h2, h3) repräsentieren, wobei für jedes durch die Messfahrt (65) erfasste Stockwerk (21, 23, 25, 27) der Aufzugsanlage (11) in der erfassten Reihenfolge als Stockwerkabschnitt-Bauteilmodell-Datensatz (121, 123, 125, 127) konfigurierte Bauteilmodell-Datensätze (112) und/oder als Schachtabschnitt-Bauteilmodell-Datensatz (141, 143, 145, 147) konfigurierte Bauteilmodell-Datensätze (112) in vertikaler Richtung übereinander angeordnet werden und bei diesen jeweils ein Vorgabe-Wert (z) der charakterisierenden Eigenschaft (H), die den Höhenabstand zum nächsten Bauteilmodell-Datensatz (112) definiert, durch die entsprechende, aus den Messdaten (G1, G2, G3, G4) ermittelte Stockwerkhöhe (h1, h2, h3) ersetzt wird.

2. Verfahren (151) nach Anspruch 1, wobei der dreidimensionale Digitaler-Doppelgänger-Datensatz (111) der bestehenden oder modernisierten Aufzugsanlage (11) mittels des Computerprogrammproduktes (109) aus Bauteilmodell-Datensätzen (112) aufgebaut und in einem Speichermedium (115) gespeichert wird, wobei jede charakterisierende Eigenschaft (T, B, H) durch einen Vorgabe-Wert (x, y, z) vordefiniert, durch einen Soll-Wert (a, b, c) vorgegeben, oder durch einen Ist-Wert (h1, h2, h3) bestimmt ist.

3. Verfahren (151) nach Anspruch 1 oder 2, wobei jeder Stockwerkabschnitt-Bauteilmodell-Datensatz (121, 123, 125, 127) beziehungsweise jeder Schachtabschnitt-Bauteilmodell-Datensatz (141, 143, 145, 147) vordefinierte Schnittstellen (131, 135) aufweist, über welche Schnittstellen (131, 135) Bauteilmodell-Datensätze (112) miteinander verbunden und zueinander positioniert werden können, wobei korrespondierende charakterisierende Eigenschaften (B, T, H) jedes anzufügenden Bauteilmodell-Datensatzes (112) mit den entsprechenden charakterisierenden Eigenschaften des über die Schnittstelle (131, 135) zur Verbindung vorgesehenen Bauteilmodell-Datensatzes (112) automatisch repliziert werden.

4. Verfahren (151) nach einem der Ansprüche 1 bis 3, wobei zumindest ein als Aufzugskabinen-Bauteilmodell-Datensatz (153) konfigurierter Bauteilmodell-Datensatz (112) und ein als Tragmittel-Bauteilmodell-Datensatz (183) konfigurierter Bauteilmodell-Datensatz (112) im durch mindestens einen Schachtabschnitt-Bauteilmodell-Datensatz (141, 143, 145, 147) gebildeten, virtuellen Schacht angeordnet wird, wobei deren charakterisierende Eigenschaften (T, B, H) zumindest Parameter (pa3, pt3, pd3) umfassen, die während der Durchführung des Verfahrens (151) verändert werden können und Teil des zu ermittelnden Parametersatzes (207) sind.

5. Verfahren (151) nach einem der Ansprüche 1 bis 4, wobei der dreidimensionale Digitaler-Doppelgänger-Datensatz (111) aus einem Speichermedium (115) abgerufen und als virtuelle Aufzugsanlage zumindest die Stockwerkhöhen (h1, h2, h3, h4) der Stockwerke (21, 23, 25, 27) im richtigen Verhältnis zueinander und den Parametersatz (207) der Aufzugssteuerung (41) dynamisch wiedergebend, auf einem Bildschirm (171) dargestellt werden kann.

6. Verfahren (151) nach einem der Ansprüche 1 bis 5, wobei über ein Graphical-User-Interface (173) weitere Bauteilmodell-Datensätze (112) von Komponenten einer Aufzugsanlage (11) aus einer Datenbank (175) ausgewählt und über vordefinierte Schnittstellen (131, 135) in den dreidimensionalen Digitaler-Doppelgänger-Datensatz (111) eingefügt werden können.

7. Verfahren (151) nach Anspruch 6, wobei als Bauteilmodell-Datensätze (112) von Komponenten zumindest aus Gegengewicht- (177), Führungsschienen- (179), Schachttüren- (161), Kabinentüren- (163), Antriebs-Bauteilmodell-Datensätzen (181) und Tragmittel-Bauteilmodell-Datensätzen (183) in verschiedenen Tragmittelführungsvarianten ausgewählt werden kann.

8. Verfahren (151) nach einem der Ansprüche 1 bis 7, wobei die durch Messdaten (G1, G2, G3, G4) oder kundenspezifische Konfigurierungsdaten (187) definierten charakterisierenden Eigenschaften (B, T, H) mit einer Kennzeichnung (*) versehen werden, so dass sie von charakterisierenden Eigenschaften (B, T, H) mit Vorgabe-Werten (x, y, z) unterschieden werden können.

9. Verfahren (151) nach Anspruch 8, wobei ein Bauteilmodell-Datensatz (112) des dreidimensionalen Digitaler-Doppelgänger-Datensatzes (111) durch einen definitiven Bauteilmodell-Datensatz (181, 183, 153) ersetzt werden kann, indem dessen mit einer Kennzeichnung (*) versehenen charakterisierenden Eigenschaften (B, T, H) durch eine Austauschrutine (189) ausgelesen werden, anhand dieser gekennzeichneten, charakterisierenden Eigenschaften (B, T, H) aus einer Datenbank (175) mögliche, zu den charakterisierenden Eigenschaften (B, T, H) passende, definitive Bauteilmodell-Datensätze (181, 183, 153) real bestehender Komponenten (31, 43, 57) von Aufzugsanlagen (11) ermittelt werden, und der ersetzende Bauteilmodell-Datensatz (112) gegebenenfalls durch manuelle Eingaben ergänzend ausgewählt wird.

10. Verfahren (151) nach einem der Ansprüche 1 bis 9, wobei der Parametersatz (207) mittels einer Optimierungsroutine (209) nach vorgebbaren Qualitätskriterien (ΔQ) in der Simulationsumgebung (250) ermittelt wird.

11. Computerprogrammprodukt (109), umfassend maschinenlesbare Programmanweisungen (107), welche bei Ausführung auf einer programmierbaren Vorrichtung (101), die hierbei mit einer Aufzugssteuerung (41) einer bestehenden oder modernisierten Aufzugsanlage (11) verbunden wird, die programmierbare Vorrichtung (101) in Zusammenwirkung mit der Aufzugsanlage (11) und einer Messeinrichtung (63) zum Durchführen oder Steuern eines Verfahrens (151) gemäß einem der Ansprüche 1 bis 10 veranlassen.

12. Computerlesbares Medium (105) mit einem darauf gespeicherten Computerprogrammprodukt (109) gemäß Anspruch 11.

## Claims

1. Method (151) for optimizing control data of the elevator controller (41) of an existing or modernized elevator system (11), wherein the elevator controller (41) is connected to a programmable device (101), wherein a three-dimensional digital twin data record (111) which can be generated by means of a computer program product (109) is loaded on the programmable device (101) as a simulation environment (250), wherein the three-dimensional digital twin data record (111) images and simulates the existing or modernized elevator system (11) assigned to the elevator controller (41), and wherein a parameter set (207) adapted for operation in the simulation environment (250) is determined for the elevator controller (41) of the existing or modernized elevator system (11) by testing the elevator controller (41) in the simulation environment (250), wherein the three-dimensional digital twin data record (111) of the existing or modernized elevator system (11) is constructed from component model data records (112) which can have different configurations and are defined by characterizing properties (T, B, H), **characterized in that** each floor (21, 23, 25, 27) of the existing elevator system (11) or the elevator system to be modernized is approached at least once by at least one measurement run (65) with the existing elevator system (11) and a measuring device (63) is used to detect at least the measurement data (G1, G2, G3, G4) which represent floor heights (h1, h2, h3), wherein, for each floor (21, 23, 25, 27) of the elevator system (11) detected by the measurement run (65), component model data records (112) configured as a floor portion component model data record (121, 123, 125, 127) and/or component model data records (112) configured as a shaft portion component model data record (141, 143, 145, 147) are arranged in the detected sequence one above the other in the vertical direction, and in each of these a default value (z) of the characterizing property (H) which defines the height distance to the next component model data record (112) is replaced by the corresponding floor height (h1, h2, h3) determined from the measurement data (G1, G2, G3, G4).

2. Method (151) according to claim 1, wherein the three-dimensional digital twin data record (111) of the existing or modernized elevator system (11) is constructed from component model data records (112) by means of the computer program product (109) and stored in a storage medium (115), wherein each characterizing property (T, B, H) is predefined by a default value (x, y, z), predetermined by a target value (a, b, c), or determined by an actual value (h1, h2, h3).

3. Method (151) according to either claim 1 or claim 2, wherein each floor portion component model data record (121, 123, 125, 127) or each shaft portion component model data record (141, 143, 145, 147) has predefined interfaces (131, 135), via which interfaces (131, 135) component model data records (112) can be connected to one another and positioned relative to one another, wherein corresponding characterizing properties (B, T, H) of each component model data record (112) to be added are automatically replicated with the corresponding characterizing properties of the component model data record (112) provided for connection via the interface (131, 135).

4. Method (151) according to claims 1 to 3, wherein at least a component model data record (112) configured as an elevator car component model data record (153) and a component model data record (112) configured as a suspension means component model data record (183) is arranged in the virtual shaft formed by at least one shaft portion component model data record (141, 143, 145, 147), wherein the characterizing properties (T, B, H) thereof comprise at least parameters (pa3, pt3, pd3) that can be changed during the execution of the method (151) and are part of the parameter set (207) to be determined.

5. Method (151) according to any of claims 1 to 4, wherein the three-dimensional digital twin data record (111) can be retrieved from a storage medium (115) and can be represented on a screen (171) reproducing at least the floor heights (h1, h2, h3, h4) of the floors (21, 23, 25, 27) as a virtual elevator system in the correct relationship to one another and dynamically reproducing the parameter set (207) of the elevator controller (41).

6. Method (151) according to any of claims 1 to 5, wherein further component model data records (112) of components of an elevator system (11) can be selected from a database (175) via a graphical user interface (173) and inserted into the three-dimensional digital twin data record (111) via predefined interfaces (131, 135).

7. Method (151) according to claim 6, wherein at least counterweight (177), guide rail (179), shaft door (161), car door (163), drive component model data records (181) and suspension means component model data records (183) in different suspension means guiding variants can be selected as component model data records (112) of components.

8. Method (151) according to any of claims 1 to 7, wherein the characterizing properties (B, T, H) defined by measurement data (G1, G2, G3, G4) or customer-specific configuration data (187) are provided with a designation (*), so that they can be distinguished from characterizing properties (B, T, H) with default values (x, y, z).

9. Method (151) according to claim 8, wherein a component model data record (112) of the three-dimensional digital twin data record (111) can be replaced by a definitive component model data record (181, 183, 153) by the characterizing properties (B, T, H) thereof, provided with a designation (*), being read out via an exchange routine (189), by possible definitive component model data records (181, 183, 153), matching the characterizing properties (B, T, H), of actually existing components (31, 43, 57) of elevator systems (11) being determined from a database (175) on the basis of these designated, characterizing properties (B, T, H), and by the replacing component model data record (112) being additionally optionally selected by manual inputs.

10. Method (151) according to any of claims 1 to 9, wherein the parameter set (207) is determined in the simulation environment (250) using an optimization routine (209) according to predeterminable quality criteria (ΔQ).

11. Computer program product (109) comprising machine-readable program instructions (107) which, when executed on a programmable device (101), which is connected in this case to an elevator controller (41) of an existing or modernized elevator system (11), cause the programmable device (101), in cooperation with the elevator system (11) and a measuring device (63), to carry out or control a method (151) according to any of claims 1 to 10.

12. Computer-readable medium (105) having a computer program product (109) according to claim 11 stored thereon.

## Revendications

1. Procédé (151) permettant d'optimiser des données de commande de la commande d'ascenseur (41) d'une installation d'ascenseur (11) existante ou modernisée, la commande d'ascenseur (41) étant connectée à un dispositif programmable (101), un jeu de données de double numérique tridimensionnel (111) pouvant être généré au moyen d'un produit programme informatique (109) étant chargé en tant qu'environnement de simulation (250) dans le dispositif programmable (101), le jeu de données de double numérique tridimensionnel (111) reproduisant et simulant l'installation d'ascenseur (11) existante ou modernisée associée à la commande d'ascenseur (41), et un jeu de paramètres (207) adapté à un fonctionnement dans l'environnement de simulation (250) étant déterminé pour la commande d'ascenseur (41) de l'installation d'ascenseur (11) existante ou modernisée en testant la commande d'ascenseur (41) dans l'environnement de simulation (250), le jeu de données de double numérique tridimensionnel (111) de l'installation d'ascenseur (11) existante ou modernisée étant constitué de jeux de données de modèles de pièces (112) qui peuvent présenter des configurations différentes et sont définis par des propriétés caractéristiques (T, B, H), **caractérisé en ce que** chaque étage (21, 23, 25, 27) de l'installation d'ascenseur (11) existante ou à moderniser est approché au moins une fois par au moins un parcours de mesure (65) avec l'installation d'ascenseur (11) existante et ainsi au moins les données de mesure (G1, G2, G3, G4) représentant des hauteurs d'étage (h1, h2, h3) sont détectées au moyen d'un appareil de mesure (63), des jeux de données de modèles de pièces (112) configurés en tant que jeux de données de modèles de pièces de section d'étage (121, 123, 125, 127) et/ou des jeux de données de modèles de pièces (112) configurés en tant que jeux de données de modèles de pièces de section de cage (141, 143, 145, 147) étant superposés dans la direction verticale dans l'ordre détecté pour chaque étage (21, 23, 25, 27) de l'installation d'ascenseur (11) détecté par le parcours de mesure (65), et pour lesdits jeux de données de modèles de pièces, respectivement une valeur par défaut (z) de la propriété caractéristique (H) définissant la distance en hauteur par rapport au jeu de données de modèle de pièce (112) suivant étant remplacée par la hauteur d'étage (h1, h2, h3) correspondante déterminée à partir des données de mesure (G1, G2, G3, G4).

2. Procédé (151) selon la revendication 1, dans lequel le jeu de données de double numérique tridimensionnel (111) de l'installation d'ascenseur (11) existante ou modernisée est constitué de jeux de données de modèles de pièces (112) au moyen du produit programme informatique (109) et est stocké dans un support de stockage (115), chaque propriété caractéristique (T, B, H) étant prédéfinie par une valeur par défaut (x, y, z), prédéterminée par une valeur de consigne (a, b, c) ou déterminée par une valeur réelle (h1, h2, h3).

3. Procédé (151) selon la revendication 1 ou 2, dans lequel chaque jeu de données de modèle de pièce de section d'étage (121, 123, 125, 127) ou chaque jeu de données de modèle de pièce de section de cage (141, 143, 145, 147) présente des interfaces (131, 135) prédéfinies, par l'intermédiaire desquelles interfaces (131, 135) des jeux de données de modèles de pièces (112) peuvent être interconnectés et positionnés les uns par rapport aux autres, des propriétés caractéristiques (B, T, H) correspondantes de chaque jeu de données de modèle de pièce (112) à compléter étant automatiquement reproduit avec les propriétés caractéristiques correspondantes du jeu de données de modèle de pièce (112) prévu pour la connexion par l'intermédiaire de l'interface (131, 135).

4. Procédé (151) selon l'une des revendications 1 à 3, dans lequel au moins un jeu de données de modèle de pièce (112) configuré en tant que jeu de données de modèle de pièce de cabine d'ascenseur (153) et un jeu de données de modèle de pièce (112) configuré en tant que jeu de données de modèle de pièce de moyen de support (183) sont disposés dans une cage virtuelle constituée par au moins un jeu de données de modèle de pièce de section de cage (141, 143, 145, 147), les propriétés caractéristiques (T, B, H) de ladite cage comprenant au moins des paramètres (pa3, pt3, pd3) qui peuvent être modifiés pendant la mise en oeuvre du procédé (151) et font partie du jeu de paramètres (207) à déterminer.

5. Procédé (151) selon l'une des revendications 1 à 4, dans lequel le jeu de données de double numérique tridimensionnel (111) est récupéré à partir d'un support de stockage (115) et peut être affiché sur un écran (171) en tant qu'installation d'ascenseur virtuelle de manière à reproduire dynamiquement au moins les hauteurs d'étage (h1, h2, h3, h4) des étages (21, 23, 25, 27) dans une relation correcte les unes par rapport aux autres et le jeu de paramètres (207) de la commande d'ascenseur (41).

6. Procédé (151) selon l'une des revendications 1 à 5, dans lequel d'autres jeux de données de modèles de pièces (112) de composants d'une installation d'ascenseur (11) sont sélectionnés dans une base de données (175) par l'intermédiaire d'une interface utilisateur graphique (173) et peuvent être insérés dans le jeu de données de double numérique tridimensionnel (111) par l'intermédiaire d'interfaces (131, 135) prédéfinies.

7. Procédé (151) selon la revendication 6, dans lequel au moins des jeux de données de modèles de pièces de contrepoids (177), de rails de guidage (179), de portes de cage (161), de portes de cabine (163), d'entraînement (181) et des jeux de données de modèles de pièces de moyen de support (183) dans différentes variantes de guidage de moyen de support peuvent être sélectionnés en tant que jeu de données de modèle de pièce (112) de composants.

8. Procédé (151) selon l'une des revendications 1 à 7, dans lequel les propriétés caractéristiques (B, T, H) définies par des données de mesure (G1, G2, G3, G4) ou des données de configuration spécifiques au client (187) sont pourvues d'un marquage (*) afin qu'elles puissent être distinguées de propriétés caractéristiques (B, T, H) comportant des valeurs par défaut (x, y, z).

9. Procédé (151) selon la revendication 8, dans lequel un jeu de données de modèle de pièce (112) du jeu de données de double numérique tridimensionnel (111) peut être remplacé par un jeu de données de modèle de pièce définitif (181, 183, 153) par le fait que ses propriétés caractéristiques (B, T, H) pourvues d'un marquage (*) sont lues par une routine d'échange (189), sur la base desdites propriétés caractéristiques (B, T, H) marquées, d'éventuels jeux de données de modèles de pièces (181, 183, 153) de composants (31, 43, 57) réels d'installations d'ascenseur (11), définitifs et adaptés aux propriétés caractéristiques (B, T, H), sont déterminés à partir d'une base de données (175), et le jeu de données de modèle de pièce (112) de remplacement est éventuellement sélectionné en complément par des entrées manuelles.

10. Procédé (151) selon l'une des revendications 1 à 9, dans lequel le jeu de paramètres (207) est déterminé dans l'environnement de simulation (250) au moyen d'une routine d'optimisation (209) selon des critères de qualité (ΔQ) pouvant être prédéterminés.

11. Produit programme informatique (109), comprenant des instructions de programme lisibles par machine (107) qui, lorsqu'elles sont exécutées sur un dispositif programmable (101) connecté ici à une commande d'ascenseur (41) d'une installation d'ascenseur (11) existante ou modernisée, permettent au dispositif programmable (101) en coopération avec l'installation d'ascenseur (11) et un appareil de mesure (63) de mettre en oeuvre ou de commander un procédé (151) selon l'une des revendications 1 à 10.

12. Support lisible par ordinateur (105) sur lequel est stocké un produit programme informatique (109) selon la revendication 11.
